(19) Europäisches Patentamt
European Patent Office
Office européen des brevets

(11) EP 1 202 374 A1

(12) **EUROPEAN PATENT APPLICATION**
published in accordance with Art. 158(3) EPC

(43) Date of publication:
**02.05.2002 Bulletin 2002/18**

(21) Application number: **01904518.6**

(22) Date of filing: **16.02.2001**

(51) Int Cl.[7]: **H01M 10/40**

(86) International application number:
**PCT/JP01/01135**

(87) International publication number:
**WO 01/73884 (04.10.2001 Gazette 2001/40)**

(84) Designated Contracting States:
**AT BE CH CY DE DK ES FI FR GB GR IE IT LI LU MC NL PT SE TR**

(30) Priority: **28.03.2000 JP 2000089934**
**28.03.2000 JP 2000089936**
**28.03.2000 JP 2000089965**
**28.03.2000 JP 2000089972**
**28.03.2000 JP 2000089974**

(71) Applicant: **NGK INSULATORS, LTD.**
**Nagoya-shi Aichi 467-8530 (JP)**

(72) Inventors:
- **YANG, Li**
**Nagoya-city, Aichi 467-8530 (JP)**
- **YOSHIDA, Toshihiro**
**Nagoya-city, Aichi 467-8530 (JP)**
- **NEMOTO, Hiroshi**
**Nagoya-city, Aichi 467-8530 (JP)**
- **TAKAHASHI, Michio**
**Nagoya-city, Aichi 467-8530 (JP)**

(74) Representative:
**Leson, Thomas Johannes Alois, Dipl.-Ing.**
**Tiedtke-Bühling-Kinne & Partner GbR,**
**TBK-Patent,**
**Bavariaring 4**
**80336 München (DE)**

# (54) LITHIUM SECONDARY CELL

(57) A lithium secondary battery includes: an electrode body having a positive electrode, a negative electrode, and a separator, the positive electrode and the negative electrode being wound or laminated by means of the separator; and a nonaqueous electrolyte solution containing a lithium compound as a electrolyte. At least one of the positive electrode, the negative electrode, the separator, the nonaqueous electrolyte solution contains at least one of: (a) an organic and/or inorganic inhibitor, which functions as a Cu-corrosion inhibitor or a Cu-trapping agent, (b) a compound having an organic base and an inorganic acid which are unitarily combined in a molecule, (c) a cyclic compound containing a N-O radical in a molecular structure, (d) a cyclic compound which becomes a $Mn^{2+}$ supplier in the nonaqueous electrolyte solution, (e) a compound containing an atom showing Lewis acidity and an atom showing Lewis basisity in one molecule, (f) a three-dimensional siloxane compound, and (g) a nonionic surfactant; or the nonaqueous electrolyte solution contains: (h) a water-extracting agent, or (i) a hydrofluoric acid-extracting agent. This lithium secondary battery exhibits an excellent effect that self-discharge property, cycle characteristics, long period stability and reliability can be planned.

FIG. 1

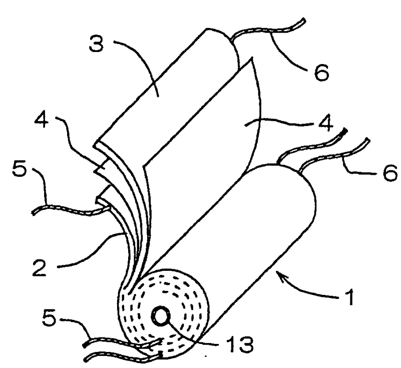


EP 1 202 374 A1

## Description

Technical Field

The present invention relates to a lithium secondary battery superior in self-discharge property, cycle characteristics, long period stability and reliability.

Background Art

In recent years, lithium secondary batteries are widely used as chargeable-dischargeable secondary batteries having a small size and a large energy density to serve as a power source for electronic equipment such as portable communication equipment and a notebook-sized personal computer. In addition, while requests for resource saving and energy saving are raised with international protection of the earth environment for a background, the lithium secondary battery is expected as a motor driving battery for an electric vehicle or a hybrid electric vehicle in the automobile business world, and as an effective measure for using electric power due to preservation of night electric power in the electric power business world. Thus, it is of urgent necessity to put a lithium secondary battery having a large capacity suitable for these uses to practical use.

It is general in a lithium secondary battery that a lithium transition metal compound oxide is used as a positive active material and carbon material such as hard carbon or graphite is used as a negative active material. In addition, since a lithium secondary battery using such materials has a high reaction potential of about 4.1V, an aqueous electrolyte solution cannot be employed as an aqueous electrolyte solution like conventional secondary batteries. Therefore, a nonaqueous electrolyte solution prepared by dissolving a lithium compound in an organic solvent is employed.

There is used, as a positive electrode, one produced by coating an aluminum foil with a mixture of a positive active material and a carbon powder for improving conductivity. As the positive active material, lithium cobalt oxide ($LiCoO_2$), lithium manganese oxide ($LiMn_2O_4$) or the like is used. On the other hand, as a negative electrode, there is used one produced by coating a copper foil with a carbon powder of an amorphous carbon material such as soft carbon or hard carbon, of natural graphite or the like.

The metallic foils for the positive and negative electrodes play a role of taking out a current generated in the interior electrode body of the lithium secondary battery and transmitting the current to an electrode terminal and are generally called as current collector. It is thought that a material having high purity is preferably used for a current collector produced with the metallic foils in the positive and negative plates in order to prevent a battery from deterioration in performance due to corrosion caused by an electrochemical reaction on the current collector because a lithium secondary battery has high reaction potential. As an electrolyte solution to be used for the battery, there is used nonaqueous organic solvent from which water is removed as much as possible. With regard to the other chemical materials, members, and the like, the ones not containing water are used. However, it is impossible to remove water completely, and therefore, water is present in a lithium secondary battery though it is infinitesimal. In addition, since various kinds of materials and parts constituting the battery, for example, electrode active material powder, current collector (metallic foils), metallic terminals, and a battery case are stored generally in the normal ambient atmosphere, it sometimes happens that water adsorbed on a surface of such materials and parts gets into the nonaqueous electrolyte solution when the assembly of the battery is completed. The reason why water is removed is that the electrolyte solution playing a role of transmitting current is decomposed, and deterioration of the electrolyte proceeds, and thereby an impediment to various buttery reactions is caused in addition to the simple reason that water is an impurity.

For example, if water is present in the battery in the case that lithium phosphate hexafluoride ($LiPF_6$) is used as the electrolyte, the internal resistance rises due to decrease in current-transmission substances, and gas or an oxidized substance (hydrofluoric acid) is generated. The gas raises internal pressure of the battery, and hydrofluoric acid (HF) corrodes the inner part of the battery.

This HF melts and corrodes metallic materials in a battery case and current collectors and melts the positive active material to elute transition metals, thereby metals such as Cu and Mn flow out into the electrolyte. In addition, the higher the temperature is, the more easily HF generates due to decomposition of lithium phosphate hexafluoride ($LiPF_6$), which is an electrolyte. That is, HF concentration in the electrolyte further increases.

In other words, a risk of the inner part of the battery being corroded by HF, which is an acid substance becomes higher. In a practical manner, a lithium secondary battery having deterioration in performance due to a long-term use was investigated to find that metallic foils, which were current collectors corroded and that metals eluted in the electrolyte solution were precipitated on the surface of the negative active material. The surface of the negative active material was of reddish copper-colored. Components of the surface was investigated and found that a compound containing copper (Cu) for a metallic foil of the cathode current collector (This component is hereinbelow referred to as "copper SEI layer".) was contained besides a component called SEI (Solid Electrolyte Interface) generated on a surface of carbon when $Li^+$ is inserted into the cathode carbon (This component is hereinbelow referred to as "lithium

SEI layer".) This compound seems to be CuO, $CuCO_3$, or the like.

Thus, if a copper SEI layer is added to a SEI layer (lithium SEI layer) generated due to a normal reaction on a surface of the cathode, the SEI layer becomes thicker, and a different chemical substance gets mixed in the SEI components, and thereby intercalation and deintercalation of $Li^+$, which is an electronic conductive body is hindered.

Thus, corrosion of a copper foil, which is the cathode current collector, gives rise to various reactions in a battery and becomes a serious cause of deterioration in performance. This happens remarkably in a cycle drive in which charge-discharge is repeated and becomes a fatal defect in the secondary battery.

Further, in the case that ethylene carbonate, diethyl carbonate, or a mixture thereof is used for an organic solvent as a nonaqueous electrolyte solution, it sometimes happens that the organic solvent is radicalized due to an electrochemical reaction to allow a radical molecule to be present in the electrolyte solution. Then, a radical decomposition reaction starts due to the radical molecule, decomposition of the electrolyte proceeds in chain reaction, the organic solvent such as ethylene carbonate is decomposed to be a small molecule of $CO_2$, $CO_3^{2-}$, or the like. Thus, the organic solvent loses a function as an electrolyte solution, movement of $Li^+$ is hindered, and a battery resistance rises.

The present invention has been made in view of the above problems and aims to provide a lithium secondary battery which is excellent in self-discharge property, cycle characteristics, long period stability and has high reliability by suppressing hindrance of battery reactions and decomposition of electrolytes.

Disclosure of Invention

According to the present invention, there is provided a lithium secondary battery comprising:

an electrode body having a positive electrode, a negative electrode, and a separator, the positive electrode and the negative electrode being wound or laminated by means of the separator, and
a nonaqueous electrolyte solution containing a lithium compound as a electrolyte;

characterized in that at least one of the positive electrode, the negative electrode, the separator, and the nonaqueous electrolyte solution contains at least one of:

(a) an organic and/or inorganic inhibitor, which functions as a Cu-corrosion inhibitor or a Cu-trapping agent,
(b) a compound having an organic base and an inorganic acid which are unitarily combined in a molecule,
(c) a cyclic compound containing a N-O radical in a molecular structure,
(d) a cyclic compound which becomes a $Mn^{2+}$ supplier in the nonaqueous electrolyte solution,
(e) a compound containing an atom showing Lewis acidity and an atom showing Lewis basisity in one molecule molecular-structurally,
(f) a three-dimensional siloxane compound, and
(g) a nonionic surfactant; or
the nonaqueous electrolyte solution contains:
(h) a water-extracting agent, or
(i) a hydrofluoric acid-extracting agent.

Brief Description of Drawings

Fig. 1 is a perspective view showing a structure of a wound-type electrode body.
Fig. 2 is a perspective view showing a structure of a lamination-type electrode body.
Fig. 3 is a graph showing results of a cycle test of Examples 1 - 3 and Comparative Example 1.
Figs. 4(a) and 4(b) are photographs by a scanning type electron microscope showing a particle structure of a carbon material on the surface of the negative electrode after the cycle test is completed.
Fig. 5 is a graph showing results of a cycle test of Example 4 and Comparative Example 2.
Fig. 6 is a graph showing change in cycle characteristics with regard to concentration of an added Cu inhibitor in Example 5.
Fig. 7 is a graph showing a charge-discharge pattern in a cycle test of a wound-type electrode body.
Fig. 8 is a graph showing results of a cycle test of Examples 7 - 11 and Comparative Example 3.
Fig. 9 is a graph showing results of a cycle test of Examples 12 - 14 and Comparative Example 4.
Fig. 10 is a graph showing results of a cycle test of Examples 15 - 18 and Comparative Example 5.
Fig. 11 is a graph showing results of a cycle test of Example 19 and Comparative Example 6.

Fig. 12 is a graph showing results of a cycle test of Example 20 and Comparative Example 7.
Fig. 13 is a graph showing results of a cycle test of Example 21 and Comparative Example 8.
Fig. 14 is a graph showing results of a cycle test of Example 22 and Comparative Example 9.
Fig. 15 is a graph showing results of a cycle test of Example 23 and Comparative Example 10.
Fig. 16 is a graph showing results of a cycle test of Examples 24 - 32 and Comparative Examples 11 and 12.
Fig. 17 is a graph showing results of a cycle test of Examples 33 - 35 and Comparative Example 13.

Best Mode for Carrying Out the Invention

Embodiments of the present invention are hereinbelow described. However, the present invention is by no means limited to these embodiments.

In a lithium secondary battery of the present invention, in at least one of the positive electrode, the negative electrode, the separator, the nonaqueous electrolyte solution is contained at least one of:

(a) an organic and/or inorganic inhibitor, which functions as a Cu-corrosion inhibitor or a Cu-trapping agent,
(b) a compound having an organic base and an inorganic acid which are unitarily combined in a molecule,
(c) a cyclic compound containing a N-O radical in a molecular structure,
(d) a cyclic compound which becomes a $Mn^{2+}$ supplier in the nonaqueous electrolyte solution,
(e) a compound containing an atom showing Lewis acidity and an atom showing Lewis basisity in one molecule molecular-structurally,
(f) a three-dimensional siloxane compound, and
(g) a nonionic surfactant; or
in the nonaqueous electrolyte solution is contained:
(h) a water-extracting agent, or
(i) a hydrofluoric acid-extracting agent.

Each of the aforementioned compounds (a) - (i) is hereinbelow described.

First, in the present invention, the term (a compound is) "contained" includes the case that a compound is contained in an electrode or a separator by impregnating the electrode or the separator with the nonaqueous electrolyte solution where a compound is added, or the case that a compound applied to an electrode or a separator in advance moves into the nonaqueous electrolyte solution to be contained therein.

In a lithium secondary battery of the present invention, as a method for containing the compound, there may be employed at least one of methods in which: (1) the compound is dispersed on or covers a surface of the electrode active material particles constituting a positive electrode and/or a negative electrode, (2) the compound is dispersed on a surface of the separator, and (3) the compound is fine-powdered and suspension-dispersed in the nonaqueous electrolyte solution. Therefore, these means may be used in combination.

Specifically, there may be employed, as a method for making a compound contained in an electrode, a method (dipping) for immersing the electrode in a compound agent dissolved in a soluble solvent, or a method for applying the compound on an electrode by spraying, brush coating, or the like. In any case, an electrode is impregnated with this compound and dried later to be used for production of an electrode thereafter. The same method may be employed for dispersing fixing on a surface of a separator. An electrolyte solution may be uniformly impregnated with the compound with the compound being fine-powdered up to a degree where the compound does not precipitate due to gravity.

Next, an inhibitor of (a) is described.

Though a Cu-corrosion inhibitor and a Cu-trapping agent are a general idea including an organic compound and inorganic compound capable of suppressing corrosion of a negative current collector by impregnating a lithium secondary battery and of trapping and fixing Cu eluted in an electrolyte solution, here they mean a group of compounds having high effects of Cu-corrosion resistance and Cu-trapping, and not hindering battery reaction with being chemically stabilized even in an organic solvent. In a lithium secondary battery, a battery can easily be impregnated with such a compound, which prevents a negative current collector using Cu from corroding, exhibits an effect of trapping eluted Cu, and can contribute to improvement in battery performance.

In contrast, a compound which should not included in the inhibitor of (a) means a compound which does not have effect of preventing Cu from corroding or which does not have Cu-trapping effect at all. If a compound has such effect even a little, the compound is included in the present invention.

As an organic inhibitor which can be used, the one where a central element of a polar group of said organic inhibitor contains at least one selected from the group consisting of N, P and As in 5B group and O, S and Se in 6B group of a periodic table is preferable.

As the aforementioned organic inhibitor, there may be preferably used one containing at least one of 1, 2, 3 - benzotriazole, 4 or 5 - benzotriazole, benzimidazole, 2 - benzimidazolethiol, 2 - benzoxazolethiole, 2 -methylbensothiazole, indole, and 2-mercaptothiazoline.

As the aforementioned organic inhibitor, there may be preferably used the one containing dithiocarbamic acid or a derivative thereof. As the derivative, there is preferably used one containing at least one of diethyldithiocarbamate, dimethyldithiocarbamate, N - methyldithiocarbamate, ethylenebisdithiocarbamate, and dithiocarbamate.

It is preferable that the organic inhibitor is a sulfur compound. As the sulfur compound, there is preferably used one containing at least one of derivatives of each of thiourea, thioacetamide, thiosemicarbazide, thiophenol, P-thiocresol, thiobenzoinic acid, and W-methylcaptocarboxylic acid.

As the aforementioned inhibitor, there is preferably used one containing at least one of didodecyl-tritio-carbamate, didodecyl decane-1, 10-dithiolate, dodecyl-11-cereno-cyanate undecanethiolate, octadecylthiocyanate, octadecylcerenocyanate, and tri(dodecylthio)phosphine.

As the aforementioned inhibitor, 6 substituted - 1, 3, 5 - triazine - 2, 4 dithiol is preferable. The substituent is preferably one of OH, SH, OR', $NH_2$, $NR_2$, and NHR'(R, R': hydrocarbon group).

As the aforementioned inhibitor, there is preferably used one containing at least one of amine type organic compound, amid type organic compound, tetrazole derivative, 3 - amino type organic compound, and 1, 2, 4 - triazole type organic compound.

As the aforementioned inhibitor, an imidazole type organic compound is preferable. As the imidazole type organic compound, there is preferably used the one containing at least one of imidazole, 4-methylimidazole, 4-methyl-4-methylimidazole, 1-phenyl-4-methylimidazole, and 1 - (p-tolyl) - 4 - methylimidazole.

These organic inhibitors are suitably used because they are stable in an electrolyte solution and have high $Li^+$ conductivity. Content of these organic inhibitors in a nonaqueous electrolyte solution is preferably within 0.01 - 10.0 mass%, and more preferably 0.10 - 0.50 mass%. As is clear from Examples described below, when the content of the organic inhibitors in a nonaqueous electrolyte solution is 0.01 mass%, effect as a Cu-corrosion inhibitor or a Cu-trapping agent is a little, and therefore when it is used in a battery, the battery has little functional effect. On the other hand, when the content of the organic inhibitors in a nonaqueous electrolyte solution is 10.0 mass% or more, the battery characteristics deteriorate in total as battery reaction conversely though effect as a Cu-corrosion inhibitor or a Cu-trapping agent increases. The reason why the battery characteristics deteriorate is not clear but seems to be due to decrease in ion conductivity because an electrolyte solution is diluted if the content of inhibitors is too much.

Here, a mechanism of suppressing corrosion of Cu by an organic inhibitor and trapping mechanism of the present invention is described.

As a mechanism where an organic inhibitor influences Cu, it is generally classified into adsorption type, oxidation coat type, precipitation coat type, anode type, cathode type, and bipolar type. In practice, it seems to be due to a reaction where polar groups of N, S, OH, etc., present in a molecular structure of the organic inhibitor adsorb Cu on the surface of the polar groups. In the case that an added organic inhibitor contains a N atom or a S atom in suppression of corrosion of a negative current collector (Cu foil), it is conceivable that these atoms having polarization chemically bond with each Cu atom on a surface of the Cu foil. However, whether the bonding is an anode point or cathode point is unclear. In practice, adsorption is caused to cover the whole surface of the Cu foil, and it is presumed that anode reaction and cathode reaction are suppressed.

Next, it is preferable that the inorganic inhibitor is specifically one selected from the group consisting of phosphates, chromates, iron simple substance, iron compounds, nitrites, and silicates.

As the above phosphates, it is preferable to use one of polyphosphates, glassy phosphates, hexametaphosphates, orthophosphates, and metaphosphates. As the above chromates, cylcohexyl ammonium chromate or ammonium chromate is preferable. As the above iron compounds, ferric oxide, or iron sulfide is preferable.

These inorganic inhibitors are suitably used because they are stable in an electrolyte solution and show high $Li^+$ conductivity. Content of these inorganic inhibitors in a nonaqueous electrolyte solution is preferably 0.01 - 0.10 mass% and more preferably 0.10 - 0.50 mass%. When the content of the inorganic inhibitor in a nonaqueous electrolyte solution is 0.01 mass%, effect as a Cu-corrosion inhibitor or a Cu-trapping agent is a little, and therefore when it is used in a battery, the battery has little functional effect. On the other hand, the content of the inorganic inhibitor in a nonaqueous electrolyte solution is 10.0 mass% or more, properties of the battery deteriorate in total as battery reaction conversely though effect as a Cu-corrosion inhibitor or a Cu-trapping agent increases. Like the case of organic inhibitor, the reason why the battery characteristics deteriorate is not clear but seems to be due to decrease in ion conductivity because an electrolyte solution is diluted if the content of inhibitors is too much.

Here, mechanism of suppressing corrosion of Cu by an inorganic inhibitor and trapping mechanism of the present invention is described.

As a mechanism where an inorganic inhibitor influences Cu, like an organic inhibitor, it is generally classified into adsorption type, oxidation coat type, precipitation coat type, anode type, cathode type, and bipolar type. In practice, it seems that almost all the corrosion mechanism of an inorganic inhibitor belongs to coat type, anode type, or cathode type.

Thus, in the present invention, corrosion of a negative current collector is suppressed by applying an inhibitor

to a copper foil. In addition, by making the compound present in an electrolyte solution, Cu eluted due to corrosion of a negative current collector can be trapped by the compound.

Further, if the compound is an organic compound having a heteroatom, HF in an electrolyte solution can be trapped by the effect of the heteroatom. Though, as matter of course, corrosion of a battery and deterioration of a nonaqueous electrolyte solution can be suppressed, hindrance to electric reaction can be remarkably reduced synergically because elution of Cu in an electrolyte solution is suppressed.

Next, the aforementioned compound (b) is described.

Compounds where an organic base and an inorganic acid are united are specifically compounds wherein, as an organic base, a nitride-containing six-membered ring compound, a nitride-containing polycyclic compound or the like and, as an inorganic acid, a strong acid such as hydrogen chloride and sulfuric acid are united. Further, a compound where the above organic base contains electron-donating substituent is particularly suitably employed. Examples of such a compound are 1, 8 - diamino - 4, 5 - dihydroxycyanthrachinon (Chemical formula I), 2, 4 - diamino - 6 - mercaptopyrimidine hemisulfate (Chemical formula II shown below), 6 - hydroxy - 2, 4, 5 - triaminopyrimidine sulfate (Chemical formula III shown below), 2 - iminopiperidine hydrochloride (Chemical formula IV shown below), imipramine hydrochloride (Chimical formula V shown below), and hexacyclen trisulfate (Chemical formula VI shown below.) These are suitably used as the compound because they are stable in an electrolyte solution and show high $Li^+$ conductivity.

(Chemical formula I)

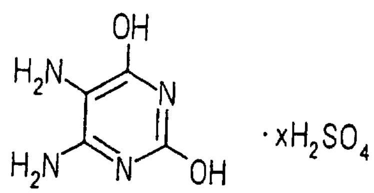

(Chemical formula II)

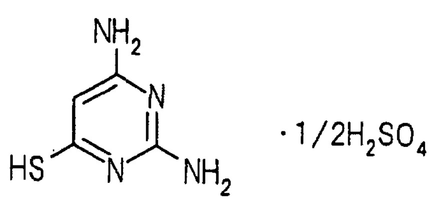

(Chemical formula III)

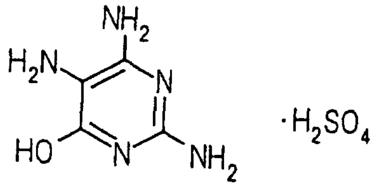

(Chemical formula IV)

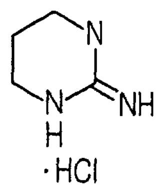

(Chemical formula V)

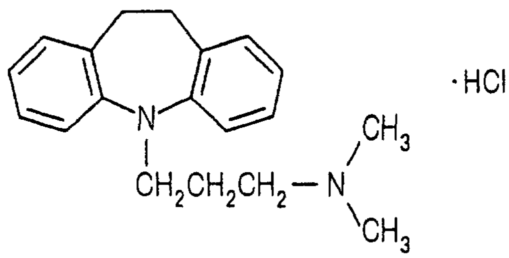

(Chemical formula VI)

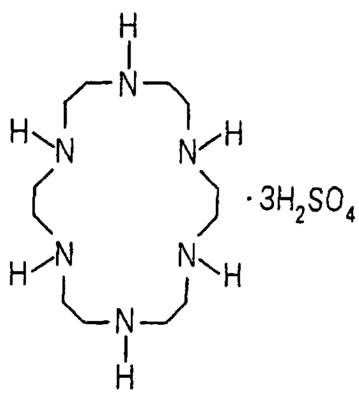

Here, a mechanism of inactivating HF and suppressing generation of SEI by a compound where an organic base and an inorganic acid are united is described.

For an electrolyte solution in the present invention, a nonaqueous electrolyte solution not containing water is used. However, when a battery is composed, water adhering to battery members, etc., cannot completely be removed. Therefore, water is present in the electrolyte solution though the amount is very small; and by the water, $LiPF_6$ which is an electrolyte, is decomposed, and HF, $CO_2$ or the like is generated.

HF generated at this time dissolves and corrodes metallic materials for a battery case and a current collector, and simultaneously dissolves a positive active material to elute transition metal. In addition, since a formation reaction of SEI is an exothermic reaction, decomposition of an electrolyte by water is accelerated, and HF is further formed.

Therefore, since HF can be immobilized to be in inactive condition because an electron-donating element in a portion of an organic base of the compound and a substituent show Lewis basicity, and thereby the reaction between

HF and battery members is suppressed. In addition, before the aforementioned SEI composite is formed, an anion of inorganic acid of the compound reacts with $Li^+$ to form a salt (LiCl, $Li_2SO_4$) and cover a surface of a negative active material. The film covering the surface of the negative active material is of a salt of a strong acid, which is chemically stable. This enables to suppress direct contact between the negative active material and HF and to suppress further growth of a SEI layer.

By the way, in the present invention, the SEI layer of a strong acid salt, which is intentionally generated on a surface of the negative active material, does not hinder movement of $Li^+$ to a gap between negative-electrode carbon layers. This is because quantity of strong acid anions, which becomes a material of a strong acid salt, in an electrolyte can be controlled depending on a quantity of the compound added. This enables to form a SEI layer on a surface of a negative active material by controlling quantity of anions in a range where movement of $Li^+$ is not hindered and where a conventional SEI layer cannot be formed.

Next, the aforementioned compound (c) is described.

As a cyclic compound containing a N-O radical in its molecular structure, a compound having a molecular structure shown in the general formula (VII) is preferable. A compound having a molecular structure shown by the general formula (VIII), as another molecular structure, is also preferred.

General formula (VII)

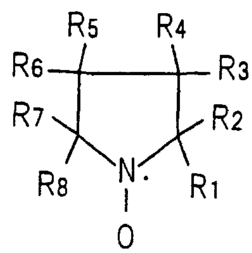

General formula (VIII)

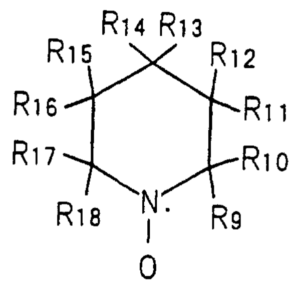

($R_1$ - $R_{18}$: hydrogen group, hydrocarbon group, or cyano group)

Examples are 2, 2, 6, 6 - tetramethyl - 1 - piperidinyloxy free radical, 4 -cyano -2, 2, 6, 6 - tetramethyl - 1 - piperidinyloxy free radical, and 3 - cyano - 2, 2, 5, 5 - tetramethyl - 1 - pyrrolidinyloxy free radical. These are small in molecular skeleton, quickly reacts with a radical molecule generated from an organic solvent, are stable in an electrolyte solution, and do not hinder movement of $Li^+$ in the electrolyte solution; and thereby being suitably used as the compound.

Next, the aforementioned compound (d) is described.

As a cyclic compound which becomes a $Mn^{2+}$ supplier, manganese (II) phthalocyanine or a manganese (II) phthalocyanine derivatives is suitably used.

Specifically, manganese (II) phthalocyanine shown by the following chemical formula (IX) exemplifies the compound. This is stable in an electrolyte solution and exhibits high $Li^+$ conductivity, and therefore being suitable used as the compound.

Chemical formula (IX)

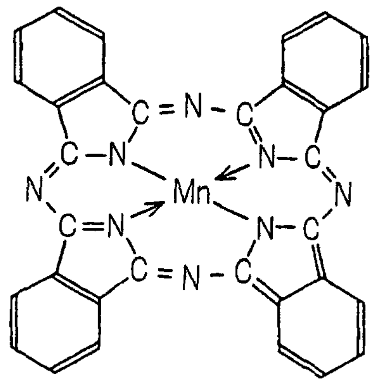

A mechanism of suppressing a radical decomposition reaction by the compound is hereinbelow described.
In the present invention, a mixture of ethylene carbonate and diethyl carbonate is used as an electrolyte solution for filling the interior of an electrode body therewith. Even in such an organic solvent, a radical molecule is sometimes generated from an organic solvent molecule due to electric reaction upon charge-discharge while charge-discharge of a battery is repeated. In the case that an electrolyte solution is of an organic solvent type, it is impossible to restore the electrolyte solution once decomposed to the original state. Therefore, when gas or the like is generated due to decomposition of an organic solvent, internal pressure of the battery rises to be under dangerous conditions.
That is, if charge-discharge is repeated in a lithium secondary battery, a part of an organic solvent $R_AH$ ($R_A$: hydrocarbon group), which is the electrolyte solution, is decomposed up to a small molecule as in the following formula (1).

$$R_AH \rightarrow R_A\bullet + H^+ \rightarrow CO_2, CO_3^{2-}, \text{etc.} \qquad \text{formula (1)}$$

($R_A\bullet$ : radical molecule generated by an electrochemical reaction)
As a method for controlling a radical decomposition reaction as the above, two methods may be employed: 1) adding a radical compound and 2) utilizing chemical equilibrium reaction for extinguishing the radical shown by the following formulae 2) and 3), respectively.

$$R_AH \rightarrow R_A\bullet + H^+ + R_B\bullet \rightarrow R_A\,R_B \qquad \text{formula (2)}$$

($R_B\bullet$ : radical cyclic compound added according to the present invention)

$$R_AH + Mn^{3+} \Leftrightarrow R_A\bullet + H^+ + Mn^{2+} \qquad \text{formula (3)}$$

1) (formula (2)) is an idea that a radical compound $R_B\bullet$ which quickly reacts is added to a radical compound $R_A\bullet$ generated upon charge discharge in proper quantity to subject the radicals to reacting and bonding mutually so as not to be decomposed any more. In addition, 2) is an idea that chemical equilibrium is moved to the side where an organic solvent is maintained by adding $Mn^{2+}$ in proper quantity by utilizing the state where a radical compound $R_A\bullet$ generated has a chemical equilibrium relation with a healthy organic solvent molecule and a manganese ion eluted from a positive active material.
Therefore, in the present invention, the radical generated upon charge-discharge is extinguished in the battery to suppress decomposition of an organic solvent by a method in which acyclic compound containing a N-O radical of the compound in a molecular structure is subjected to a radical/radical reaction, or by a method in which a cyclic compound which becomes a $Mn^{2+}$ supplier supplies a $Mn^{2+}$ ion in radical chemical equilibrium of 2); and thereby the electrolyte solution can be maintained in a healthy state.
Next, a mechanism of inactivating HF by the compound is described.
As described above, water is present in an electrolyte solution in the present invention though the amount is very small, and an electrolyte solution and an electrolyte are decomposed by the water to generate HF, gas ($CO_2$), etc.
HF generated at this time elute transition metal by dissolving a positive active material with dissolving and

corroding metal material of a battery case and a current collector to derive formation of vicious SEI containing a metallic atom. Incidentally, decomposition of an electrolyte is accelerated and proceeded more with a temperature of a battery being higher. Since the SEI formation reaction is an exothermic reaction, decomposition of an electrolyte by water is accelerated by this heat, and HF is further formed.

Therefore, in the present invention, an atom showing Lewis basicity, that is, a N atom having an unshared electron pair and showing an electron-donating property is coordinately bonded with HF having an empty electron orbit to fix HF in a molecular structure of the compound; and thereby HF in a battery is inactivated, and influence by HF can be controlled. Since the compound fixes HF even in the case that temperature of a battery itself becomes high while charge-discharge is repeated, formation of vicious SEI is suppressed.

Next, the above compound (e) is described.

As a compound containing an atom showing Lewis acidity and an atom showing Lewis basisity in one molecule molecular-structurally, alumatrane tetramer ($(C_6H_{12}NAlO_3)_4$) shown in the following chemical formula (X) is suitable. Since this has a cyclic structure, this is stable in an electrolyte solution and shows high $Li^+$ conductivity, and thereby being suitably used as the compound.

Chemical formula (X)

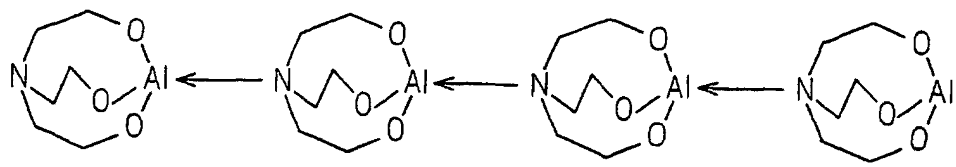

Here, a mechanism of inactivating $H_2O$ and HF by a compound containing an atom showing Lewis acidity and an atom showing Lewis basisity in one molecule is described.

Water is present in an electrolyte solution of the present invention though the amount is very small, and $LiPF_6$, which is an electrolyte, is decomposed to generate HF, $CO_2$, etc.

HF generated at this time elute transition metal by dissolving a positive active material with dissolving and corroding metal material of a battery case and a current collector to drive formation of vicious SEI containing a metallic atom. Incidentally, decomposition of an electrolyte is accelerated and proceeded more with a temperature of a battery being higher. Since the SEI formation reaction is an exothermic reaction, decomposition of an electrolyte by water is accelerated by this heat, and HF is further formed.

Therefore, an atom showing Lewis acidity, that is, an Al atom having an empty electron orbit and showing an electron-attracting property is coordinately bond with a $H_2O$ molecule present in the same electrolyte solution and having unshared electron pair to fix $H_2O$ in a molecular structure of the compound. In the same manner, an atom showing Lewis basicity, that is, a N atom having an unshared electron pair and showing an electron-donating property is coordinately bonded with HF having an empty electron orbit to fix HF in a molecular structure of the compound. By this, since the compound fixes HF even in the case that temperature of a battery itself becomes high while charge-discharge is repeated, formation of vicious SEI is suppressed.

Thus, a battery-deteriorating component is removed by two Lewis acid-base reaction of Al-$H_2O$ and N-HF. If a substance showing Lewis acidity and a substance showing Lewis basicity are added in a battery, the substances react mutually, and profitable effect cannot be obtained. However, since reaction is not caused in a compound having Lewis acidity and Lewis basicity in one molecule, each of the properties can be utilized; and $H_2O$ and HF, which are battery-deteriorating components, can be simultaneously removed.

Next, the above compound (f) is described.

Suitable three-dimensional siloxane compounds are specifically 1 - allyl - 3, 5, 7, 9, 11, 13, 15 - heptacyclopentylpentacyclo [9. 5. 1. $1^{3,9}$. $1^{5,15}$. $1^{7,13}$] octasiloxane, 1 - (3 - chloropropyl) - 3, 5, 7, 9, 11, 13, 15 - heptacyclopentylpentacyclo [9. 5. 1. $1^{3,9}$. $1^{5,15}$. $1^{7,13}$] octasiloxane, 1 - (4-vinylphenyl) - 3, 5, 7, 9, 11, 13, 15 - heptacyclopentylpentacyclo [9. 5. 1. $1^{3,9}$. $1^{5,15}$. $1^{7,13}$] octasiloxane, ethyl - 3, 5, 7, 9, 11, 13, 15 - heptacyclopentylpentacyclo [9. 5. 1. $1^{3,9}$. $1^{5,15}$. $1^{7,13}$] octasiloxane - 1 - undecanoate, 1, 3, 5, 7, 9, 11, 14 - heptacyclohexytricyclo [7. 3. 3. $1^{5,11}$] heptasiloxane - 3, 7, 14 - triol, 1, 3, 5, 7, 9 11, 13 - heptacyclopentyl - 15 - [2 - (diphenylphosphino) ethyl] pentacyclo [9. 5. 1. $1^{3,9}$. $1^{5,15}$. $1^{7,13}$] octasiloxane, 1, 3, 5, 7, 9, 11, 13 - heptacyclopenthyl - 15 - glycidilpentacyclo [9. 5. 1. $1^{3,9}$. $1^{5,15}$, $1^{7,13}$] octasiloxane, 3, 5, 7, 9, 11, 13, 15 - heptacyclopentylpentacyclo [[9. 5. 1. $1^{3,9}$. $1^{5,15}$. $1^{7,13}$] octasiloxane -

1 - butylonitrile, 3, 5, 7, 9, 11, 13, 15 - heptacyclopentylpentacyclo [[9. 5. 1. $1^{3,9}$. $1^{5,15}$. $1^{7,13}$] octasiloxane - 1 - ole, 3 - (3, 5, 7, 9, 11, 13, 15 - heptacyclopenthylpentacyclo [9. 5. 1. $1^{3,9}$. $1^{5,15}$. $1^{7,13}$] octasiloxane - 1 - yl) propylmethacrylate, 1, 3, 5, 7, 9, 11, 14 - heptacyclopentyltricyclo [7. 3. 3. $1^{5,11}$] heptasiloxane - endo - 3, 7, 14 - triol, 1, 3, 5, 7, 9, 11, 13 - heptacyclopenthyl - 15 - vinylpentacyclo [9. 5. 1. $1^{3,9}$. $1^{5,15}$. $1^{7,13}$] octasiloxane, 1 - hydride - 3, 5, 7, 9, 11, 13, 15 - heptacyclopenthylpentacyclo [9. 5. 1. $1^{3,9}$.$1^{5,15}$. $1^{7,13}$] octasiloxane, methyl - 3, 5, 7, 9, 11, 13, 15 - heptacyclopenthylpentacyclo [9. 5. 1. $1^{3,9}$. $1^{5,15}$. $1^{7,13}$] octasiloxane - 1 - propionate, 1 - [2-(5-norbornane - 2 - yl) ethyl] - 3, 5, 7, 9, 11, 13, 15 - heptacyclopenthylpentacyclo [9. 5. 1. $1^{3,9}$. $1^{5,15}$. $1^{7,13}$] octasiloxane, 1, 3, 5, 7, 9, 11, 13, 15 - octakis (dimethylsilyloxy) pentacyclo [9. 5. 1. $1^{3,9}$. $1^{5,15}$. $1^{7,13}$] octasiloxane, and 1, 3, 5, 7, 9, 11, 13, 15 - octavinylpentacyclo [9. 5. 1. $1^{3,9}$. $1^{5,15}$. $1^{7,13}$] octasiloxane. Since this has a cyclic structure, it is stable in an electrolyte and high $Li^+$ conductivity; and thereby being preferably used as the compound.

Here, a mechanism of inactivation HF by a three-dimensional siloxane compound is described.

Water is present in an electrolyte solution of the present invention though the amount is very small; and an electrolyte solution is decomposed, and an electrolyte solution and an electrolyte are decomposed by the water to generate HF, gas ($CO_2$), etc.

HF generated at this time elute transition metal by dissolving a positive active material with dissolving and corroding metal material of a battery case and a current collector to drive formation of vicious SEI containing a metallic atom. Incidentally, decomposition of an electrolyte is accelerated and proceeded more with a temperature of a battery being higher. Since the SEI formation reaction is an exothermic reaction, decomposition of an electrolyte by water is accelerated by this heat, and HF is further formed.

Therefore, in the compound, an atom showing Lewis basicity, that is, an O atom having an unshared electron pair and showing an electron-donating property is coordinately bonded with HF having an empty electron orbit to fix HF in a molecular structure of the compound; and thereby HF in a battery is inactivated, and influence by HF can be controlled. Since the compound fixes HF even in the case that temperature of a battery itself becomes high while charge-discharge is repeated, formation of vicious SEI is suppressed.

Particularly, since a three-dimensional siloxane compound has a three dimensional structure and high molecular weight, the compound can stably be present in an electrolyte even at high temperature. In addition, since the number of O atoms per unit volume is large molecular structurally, HF can efficiently be trapped and fixed. Furthermore, a five-membered ring structure which the compound has is larger by far than a radius of a $Li^+$ ion and does not hinder the movement. Therefore, a three-dimensional siloxane compound securely exhibits effect as an additive for improving cycle characteristics in a lithium secondary battery.

Further, the above compound (g) is described.

A major characteristic of a nonionic surfactant is that it does not have an ionic base; and, for example, it does not have an ion such as a sodium ion ($Na^+$). In addition, it has an ether linkage and a hydroxyl group as a hydrophillic group, has a hydrophobic group at the same time, and is soluble to a nonaqueous electrolyte solution. In other words, it is dissolved in a nonaqueous electrolyte solution by a hydrophobic group, and a hydrophillic group is bonded with a water molecule in a nonaqueous electrolyte solution to stabilize the water molecule in the nonaqueous electrolyte solution.

A nonionic surfactant can be expressed by a general formula, $R_1(OR_2)_nR_3R_4$ (n is an integer). Here, a $R_1$ group and a $R_2$ group are groups mainly consisting of hydrogen (H) and/or carbon (C). For example, if both a $R_1$ group and a $R_2$ group are alkyl groups, the $R_1$ group and the $R_2$ group are bonded with ether linkage. In addition, if a $R_1$ group is hydrogen (H), the surfactant has a hydroxyl group because it is $HOR_2$. It is preferable that ether linkage or hydroxyl group is present in a nonionic surfactant because it has high water-trapping force and can form a more stable micell.

A $R_3$ group is a group bonded on the $R_2$-group side and preferably one of oxygen (O), nitrogen (N), and ester linkage (OCO); and it is preferable that $R_4$-group is not hydrogen (H) but a group mainly consisting of hydrogen (H) and carbon (C). Incidentally, it is preferable that the integer n in the aforementioned general formula is not smaller than 2 and not larger than 60. When n=1, sufficient hydrophillicity cannot be obtained. In addition, when n>60, there is caused a problem that it does not dissolve easily in a nonaqueous electrolyte solution. The number of carbons constituting the $R_4$ group is preferably 8 or more. If the number is smaller than 8 conversely, sufficient hydrophobicity cannot be obtained, and a problem of not dissolving easily in a nonaqueous electrolyte solution is caused.

Now, in such a nonionic surfactant, one having a $CH_2CH_2$ group as the $R_2$ group in the aforementioned general formula is most suitably used. In the present invention, a polyethylene glycol derivative is suitably used as a nonionic surfactant. However, in a polyethylene glycol derivative, if polyethylene glycol itself is not contained and the $R_2$ group is a $CH_2CH_2$ group, it is profitable in respect of synthesis, purity, material price, and easiness in acquisition and has an advantage in stabilizing reaction properties with a water molecule. On the other hand, the number of carbons constituting the $R_2$ group is large, problems of generating isomer by branch of a carbon skeleton, etc., are caused. Incidentally, nonionic surfactants satisfying the aforementioned conditions are exemplified in Table 1.

Table 1

| Name of substance | Chemical formula |
|---|---|
| polyethylene glycol monocetyl ether | $H(OCH_2CH_2)nOC_{16}H_{33}$ (n=23) |
| Polyethylene glycol monododecyl ether | $H(OCH_2CH_2)nOC_{12}H_{25}$ (n=25) |
| Polyethylene glycol mono-4-nonylphenyl ether | $H(OCH_2CH_2)nO$ 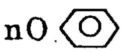 $C_9H_{19}$ (n=2,5,7.5,10,15,18,20) |
| Polyethylene grycol mono-4-octylphenyl ether | $H(OCH_2CH_2)nO$ 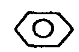 $C_8H_{17}$ (n=10) |
| Polyethylene glycol monooleyl ether | $H(OCH_2CH_2)nOC_{18}H_{37}$ (n=10) |
| Polyethylene glycol monolaurate | $H(OCH_2CH_2)nOCO(CH_2)_{10}CH_3$ (n=10) |
| Polyethylene glycol monostearate | $H(OCH_2CH_2)nOCOC_{17}H_{35}$ (n=2,4,10,25,40,45,55) |
| Polyethylene glycol stearylamine | $H(OCH_2CH_2)nNC_{18}H_{37}$ (n=10,15) |

By the way, it is possible to use, as a nonionic surfactant, a compound containing silicon (Si) as an element for constituting a molecule. However, in this case, it is considered that the nonionic surfactant does not suppress reaction between a water molecule and an electrolyte in an nonaqueous electrolyte solution and that the surfactant reacts with a fluorine ion ($F^-$) of hydrofluoric acid generated by a reaction of a water molecule and an electrolyte and functions in bar of reaction between $F^-$ and metallic material. As a result, deterioration of a battery is suppressed.

As such a nonionic surfactant containing Si, a polysiloxane derivative is suitably used in view of hydrophillicity with an electrolyte solution and water-trapping force. As shown in Table 2, "a polysiloxane derivative" means the one having a structure of a side-chain type where an organic group is introduced into a side chain of polysiloxane, a both-side terminal type where an organic group is introduced into both terminals of polysiloxane, a one-side terminal type where an organic group is introduced into a terminal of one side of polysiloxane, or a side-chain and both-side terminal type where an organic group is introduced into both a side-chain and both terminals of polysiloxane.

Table 2

| Sort of structure | General chemical formula |
|---|---|
| Side-chain type | 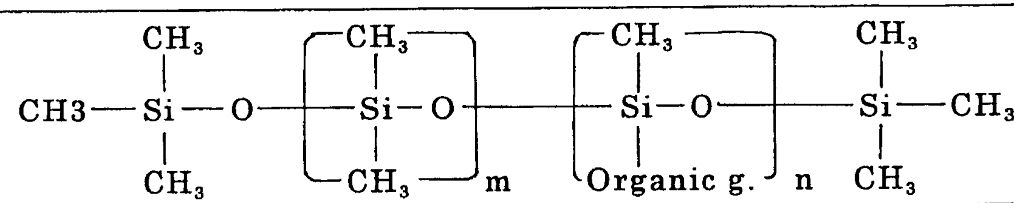 |
| Both-side terminal type | 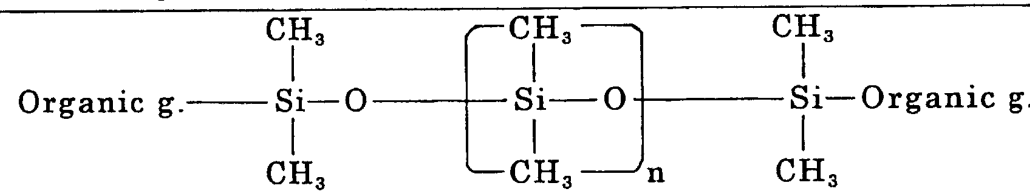 |
| One-side terminal type | 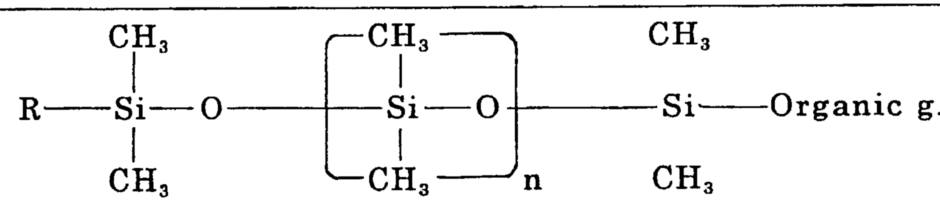 |
| Side-chain and both-side terminal type | 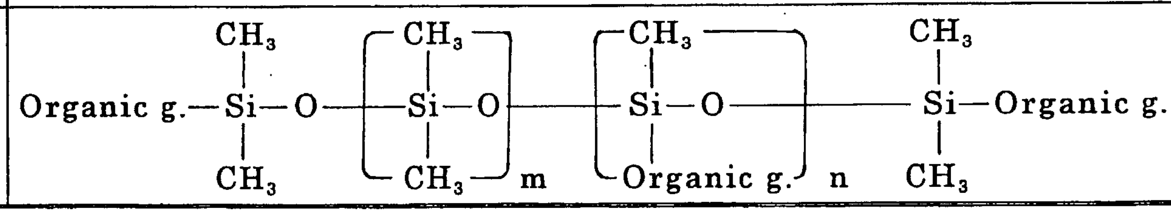 |

( R is an alkyl group, and m, n are integers.)

Incidentally, as shown in Table 3, organic groups are exemplified by various denatured groups such as amino denaturation, epoxy denaturation, carboxyl denaturation, carbinol denaturation, methacrylic denaturation, mercapto denaturation, phenol denaturation, one-end reactivity, different kind of functional group denaturation, polyether denaturation, methylstyryl denaturation, alkyl denaturation, higher fatty acid ester denaturation, and fluorine denaturation.

Table 3

| Name of organic group | Chemical formula | Name of organic group | Chemical formula |
|---|---|---|---|
| Amino denaturation | —$RMH_2$<br>—RNHR' $NH_2$ | One-end reactivity | 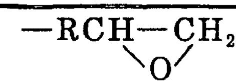<br>—ROH<br>—$R(CH_3)C{=}CH_2$<br>—$R(OH)_2$ |
| Epoxy denaturation | 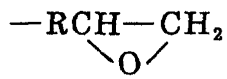<br>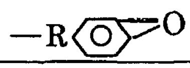 | Different kind of functional group denaturation | —$NH_2$<br>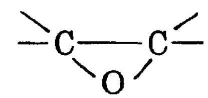<br>—OR |
| Carboxyl denaturation | —RCOOH | Polyether denaturation | —$R(C_2H_4O)_a(C_3H_8O)_bR'$ |
| Carbinol denaturation | —ROH | Methylstyryl denaturation | —$CH_2$—$C(CH_3)H$—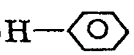 |
| Methacrylic denaturation | —$RC(CH_3){=}CH_2$ | Alkyl denaturation | —$C_nH_{2n+1}$ |
| Mercapto denaturation | —RSH | Higher fatty acid ester denaturation | —OCOR |
| Phenol denaturation | —R 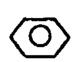 OH | Fluorine denaturation | —$CH_2CH_2CF_3$ |

(R, R' are alkyl groups, and a, b, n are integers.)

In the present invention, electron conductive particles of acetylene black or the like may be dispersed in the aforementioned various kinds of compounds. This enables to raise conductivity and prevent internal resistance from rising.

Next, the above (h) and (i) are described.

A water-extracting agent is a concept excluding a water-removing agent disclosed in Japanese Patent Application Laid-Open H9-139232 or Japanese Patent Application Laid-Open H7-122297 and characterized in that it dissolves in an organic solvent and reacts with a free water molecule having high activity and being present in the organic solvent to form (water-extracting agent)$_a$ • $(H_2O)_b$, thereby decreasing activity of water.

As such a water-extracting agent, it is preferable to use a liquid agent which uniformly mixes with an electrolyte solution and with which the inside of an interior electrode body is impregnated uniformly. Water-extracting agents capable of being used in the present invention are specifically organic phosphorous compounds and amine compounds. In the case that an organic phosphorous compound is used, the one having a P=O linkage. Such a compound is exemplified by phosphates such as trimethylphosphate, tri -2- propylphosphate, tributylphosphate, tetraisopropylethylenephosphonate, and phosphineoxides such as tributylphosphineoxide, trioctylphosphineoxide, and triphenylphosphineoxide.

Here, a water-extracting reaction in the case of using trimethylphosphate is expressed as the following formula (4).

$$a(CH_3O)_3PO+bH_2O\rightarrow((CH_3O)_3PO)_a \bullet (H_2O)_b \qquad \text{formula (4)}$$

It is expected that completely removing water is difficult even in the case that an extracting agent is added to a nonaqueous electrolyte solution as described above. Therefore, it is preferable to add, besides a water-extracting agent, a hydrofluoric acid-extracting agent which directly remove HF to prevent metallic material from being corroded by HF. In addition, by adding a hydrofluoric acid-extracting agent alone to a nonaqueous electrolyte solution instead of a water-extracting agent, a hydrofluoric acid-extracting agent contributes to suppression of corrosion or the like of metal by HF, and thereby improvement in cycle characteristics is planned.

From such a view point, a hydrofluoric acid-extracting agent is suitably added to a nonaqueous electrolyte solution. Though a hydrofluoric acid-extracting agent can be used together with a water-extracting agent, it was found that a hydrofluoric acid-extracting agent greatly contributes to improving cycle characteristics even in the case that it is independently used as shown in results of the test described below as well as the case that a water-extracting agent is independently used.

As a hydrofluoric acid-extracting agent, an organic silicon compound or an organic antimony compound is suitably used, and a liquid material is preferably used like a water-extracting agent. As an organic silicon compound, a silane class or polysiloxane may be used. Particularly suitably used are a silane class of triethylsilane, triphenylsilane, methyltriethoxysilane, ethyl silicate, methyltriacetoxysilane, ethyltrichlorosilane, and iodotrimethylsilane. An organic antimony compound may be exemplified by a tetraphenylantimony ion.

Here, a reaction of extracting hydrofluoric acid in the case of using triethylsilane is expressed as the following formula (5).

$$(C_2H_5)_3SiH+HF\rightarrow(C_2H_5)_3SiF+H_2 \qquad \text{formula (5)}$$

Incidentally, a hydrofluoric acid-extracting agent in the present invention is not for fixing HF itself but for forming a compound with a fluorine ion as shown in the above formula (5). In the case that a silane class is used, hydrogen gas is generated. However, since the amount is very small, it neither brings on a large change to an internal pressure of a battery nor affects properties of a battery.

As described above in detail, a lithium secondary battery of the present invention employs a nonaqueous electrolyte solution where a lithium compound generating a lithium ion ($Li^+$) upon being dissolved as an electrolyte. Therefore, there is by no means limited to the other material or a structure of the battery. The main members constituting the battery and the structure are briefly described hereinbelow.

A structure of an electrode body, which may be said to be the heart of a lithium secondary battery, is a single cell structure where a separator formed by subjecting each of positive and negative electrode active materials to press molding into a disc shape is inserted as seen in a coin battery having a small capacity.

In contrast to a battery having a small capacity like a coin battery, a structure of an electrode body to be used in a battery having a large capacity is a wound type. As shown in the perspective view of Fig. 1, a wound type of electrode body 1 is structured by winding a positive electrode 2 and a negative electrode 3 around a core 13 via a

separator 4 lest the positive electrode 2 and the negative electrode 3 should be brought into direct contact with each other. At least one electrode lead 5 • 6 is enough to be fixed to the positive electrode 2 and the negative electrode 3 (hereinbelow referred to as "electrodes 2 • 3), and current-collecting resistance can be decreased by arranging a plurality of electrode leads 5, 6.

Another structure of an electrode body is a lamination type where a plurality of single-cell type of electrode bodies form a lamination. As shown in Fig. 2, a lamination type of electrode body 7 is formed by piling up positive electrodes 8 and negative electrodes 9 alternately via a separator 10, and at least one electrode lead 11 • 12 is attached to one electrode 8 • 9. Materials for the electrodes 8 • 9 and methods for manufacturing the electrodes 8 • 9 are the same as the electrodes 2 • 3 in the wound-type electrode body 1.

Next, the structure is described in more detail with the example of the wound type of electrode body 1. The positive electrode 2 is produced by applying positive active material on both surfaces of a current collector. As a current collector, a metallic foil having good corrosion resistance against a positive electrochemical reaction, such as an aluminum foil and a titanium foil. Punching metal or mesh (a net) may be employed other than a foil. In addition, as positive active material, a lithium transition metal composite oxides (e.g., $LiMn_2O_4$, $LiCoO_2$, or $LiNiO_2$) may be suitably used; and carbon fine powder of acetylene black or the like is preferably added thereto as a conducting aid.

Here, it is preferable to use particularly a lithium manganate having a cubic spinel structure (hereinbelow referred to as "$LiMn_2O_4$ spinel") because resistance of the electrode body can be decreased in comparison with the case of using another electrode active material. The effect of improving properties of a nonaqueous electrolyte solution is exhibited more remarkably by being combined with the effect of decreasing the interior resistance, and thereby improvement in cycle characteristics of a battery is preferably planned.

Incidentally, a $LiMn_2O_4$ spinel is not limited to the one having such a stoichiometric composition, and also a spinel expressed by a general formula $LiM_XMn_{2-X}O_4$ (M is a substituent, X is the amount of substituent), where a part of Mn is substituted by another element, is suitably used. The substituent M is exemplified by atomic symbols of Li, Fe, Mn, Ni, Mg, Zn, B, Al, Co, Cr, Si, Ti, Sn, P, V, Sb, Nb, Ta, Mo, and W.

Here, in the substituent M, theoretically, Li becomes a monovalent plus ion, Fe, Mn, Ni, Mg, and Zn become divalent plus ions, B, Al, Co, and Cr become trivalent plus ions, Si, Ti, and Sn become tetravalent plus ions, P, V, Sb, Nb, and Ta become pentavalent plus ions, and Mo and W become hexavalent plus ions. They are elements dissolved in the $LiMn_2O_4$ spinel. There are cases of divalent plus ions regarding Co and Sn, trivalent plus ions regarding Fe, Sb, and Ti, a trivalent plus ion and a tetravalent plus ion regarding Mn, a tetravalent plus ion and a hexavalent plus ion regarding Cr.

Therefore, there is the case that each kind of the substituents M is present in the condition of having a mixed valence, and the amount of oxygen is not required to be always 4 as shown in a stoichiometric composition and may be deficient within a range for maintaining a crystal structure or may be present in surplus.

The positive active material is formed in such a manner that a slurry or a paste prepared by adding solvent, a binding agent, etc., to a positive active material powder is applied to a current collector by a roll-coater method and dried. Then, it is subjected to a press treatment as necessary.

The negative electrode 3 can be produced in the same manner as in the positive electrode 2. As a current collector of the negative electrode 3, a metallic foil having good corrosion resistance against a positive electrochemical reaction, such as a copper foil and a nickel foil is suitably used. As the negative active material, an amorphous carbon material such as soft carbon and hard carbon or a highly graphitized carbon powder such as artificial graphite and natural graphite.

As the separator 4, there is preferably used the one having a three-layered structure where a $Li^+$-permiable polyethylene film (PE film) having micro-pores is put between porous $Li^+$-permiable polypropylene films (PP films). This doubles as a safety mechanism of controlling $Li^+$ movement, i.e., battery reaction in such a manner that, when temperature of the electrode body is raised, the PE film is softened at about 130°C to collapse micro-pores. Since the PE film is put between the PP films having higher softening temperature, PP films keep the shape and prevent the positive electrode 2 and the negative electrode 3 from a contact and a short circuit, and thus secure suppress of battery reaction and security of safety become possible.

Upon winding operation of the electrodes 2, 3 and the separator 4, the leads 5 • 6 are attached to the electrodes 2, 3, respectively, in a portion where the electrode active material is not applied to expose the current collector. As the electrode leads 5, 6, the ones having a foil-like shape of the same material as the current collector of the electrodes 2, 3, respectively. The electrode leads 5, 6 can be fixed to the electrode 2, 3 by the use of ultrasonic-wave welding, spot welding, or the like. At this time, it is preferable to fix each of the electrode lead 5, 6 so that an electrode lead of one of the electrode is disposed on an end surface of the electrode body 1 because the electrode leads 5, 6 can be prevented from the contact with each other.

In composition of the battery, a produced electrode body 1 is inserted into a battery case with securing conduction between a terminal for taking out current outside and the electrode leads 5, 6 in the first place so as to be held in a stable position. After that, the battery is impregnated with nonaqueous an electrolyte solution; and then, the battery

case is sealed to obtain a battery.

Next, a nonaqueous electrolyte solution to be used for a lithium secondary battery of the present invention is described. As a solvent, a single solvent or a mixed solvent of carbonates such as ethylene carbonate (EC), diethyl carbonate (DEC), dimethyl carbonate (DMC), propylene carbonate (PC), or $\gamma$ - butyrolactine, tetrahydrofuran, acetonitrile, etc.

A lithium compound dissolved in such a solvent, that is, an electrolyte is exemplified by a lithium complex fluoride compound such as lithium phosphate hexafluoride ($LiPF_6$) and lithium borofluoride ($LiBF_4$), and a lithium halide such as lithium perchlorate ($LiClO_4$); and one kind or two or more kinds of them are dissolved in the aforementioned solvent. It is particularly preferable to use a lithium phosphate hexafluoride ($LiPF_6$) which hardly causes oxidation decomposition and which has high conductivity of nonaqueous electrolyte solution.

The present invention is hereinbelow described in more detail on the basis of Examples. However, the present invention is by no means limited to these Examples.

(Examples 1 - 3, Comparative Example 1)

Batteries of Examples 1 - 3 and Comparative Example 1 are produced in such a manner that acetylene black as a conducting aid and polyvinylidene fluoride as a binder were mixed with $LiMn_2O_4$ spinel as positive active material at the ratio of 2 : 3 : 50 to give a positive electrode material; 0.01g of the positive electrode material was subjected to press molding under a pressure of 300 kg/cm$^2$ to give a disc-shaped positive electrode having a diameter of 20 mm; a coin-cell type of electrode body was produced by the use of the positive electrode and a negative electrode of carbon and put in a battery case, which was then filled with a nonaqueous electrolyte solution. Here was used, as the nonaqueous electrolyte solution, a solution where $LiPF_6$ as an electrolyte was dissolved so as to give a concentration of 1 mol/liter by adding the compound (a) of the present invention of each mass% as in Table 4 to a mixed solvent containing the same volume of EC and DEC.

Table 4

| | Additive | Amount of additive (mass % to electrolyte solution) |
|---|---|---|
| Example 1 | 1, 2, 3 - benzotriazole | 0.1 |
| Example 2 | 2, 5 - dimethylcaptothiadizole | 0.1 |
| Example 3 | 1-(p-tolyl)-4-methylimidazole | 0.1 |
| Comparative Example 1 | (None) | - |

Next, a cycle test in a coin-cell type of battery was performed by repeating a cycle of charge-discharge cycle shown below. That is, as one cycle, the battery was charged up to a voltage of 4.1V with a current of 1.3 mA, and subsequently charged for 3 hours in total with a certain voltage, and after that, discharged with a fixed current of 1.3 mA corresponding to 1C (discharge rate) until the voltage became 2.5V, followed by a pause of 600 seconds. A pattern was set so as to repeat the charge-discharge cycle in the same manner. Incidentally, relative discharge capacity (%) (cycle characteristic) was calculated by using the following numerical formula.

$$\text{Relative discharge capacity (\%)}$$

$$= \text{discharge capacity in each cycle / discharge capacity in first cycle}$$

(Evaluation for cycle characteristics)

As is clear from Fig. 3, batteries in Examples 1- 3 of the present invention achieved a capacity-retention rate of 95% in a 100-cycle test and exhibited by far excellent cycle characteristics in comparison with the one in Comparative Example 1, where the compound was not used. This seems that the compound trapped Cu eluted in a electrolyte solution due to corrosion of a negative current collector and suppressed formation of a copper SEI layer to reduce hindrance to battery reaction, thereby improving the cycle life span.

In Examples 1- 3 and Comparative Example 1, a coin-cell battery subjected to the cycle test was decomposed

in a glove box, and the positive electrode and the negative electrode were taken out to be washed with a mixed solvent of EC and DEC. These electrodes were subjected to observation of secondary electron image with an acceleration voltage of 20 kV by the use of a scanning electron microscope (SEM, JEM-5410 manufactured by JEOL Ltd., and an element analysis by an EDS was performed in addition.

(Observation-evaluation of electrodes after cycle test)

In Examples 1 - 3 and Comparative Example 1, there found no difference in the surface form in the positive electrodes. However, as shown in Figs. 4(a) and 4(b), a large difference was observed in the negative electrodes. In Example 1, where the compound was added, a coat (lithium SEI layer) due to decomposition or the like of the electrode was observed on a carbon surface of the negative electrode as shown in Fig. 4(a). However, no other difference from unused carbon was found. On the other hand, in Comparative Example 1, a granulated substance was observed besides a lithium SEI layer on a carbon surface of the negative electrode as shown in Fig .4(b). These negative electrodes were subjected to an EDS element analysis, and Cu was detected on the carbon surface and in the periphery of the carbon surface including the granulated substance. However, in negative electrodes in Examples 1 - 3, no Cu was detected.

This is a result of the compound's trapping Cu eluted from the negative current collector to avoid precipitation of Cu on a carbon surface of the negative electrode by adding the compound of the present invention to the electrolyte solution, and this seems to have suppressed hindrance to battery reaction in the negative electrode to improve cycle characteristics.

(Example 4, Comparative Example 2)

Batteries of Example 4 and Comparative Example 2 were produced in such a manner that a coin-cell type of electrode body is produced in the same manner as in Example 1 and put in a battery case, which was then filled with nonaqueous electrolyte solution. In this case, there was used, as the nonaqueous electrolyte solution, a solution prepared by adding 500 ppm of water content ($H_2O$), which becomes a cause of deterioration in battery properties, and 0.3 mass% of 1, 2, 3 - benzotriazole, which is the compound, to a mixed solvent of the same volume of EC and DEC, and then dissolving $LiPF_6$ therein to give a concentration of 1 mol/liter. The other methods for production were the same as in Example 1. In addition, a cycle test was performed in the same manner as in Example 1.

(Evaluation)

As is clear from Fig. 5, a battery in Example 4 of the present invention achieved a capacity-retention rate of 93% in a 100-cycle test and exhibited by far excellent cycle characteristics in comparison with the one in Comparative Example 2, where the compound was not used. Thus, it has been clearly proved that a compound disclosed in the present invention exhibits excellent effect in a cycle life span, which is an important battery property, by an inspection in the Example 4, where water was intentionally added.

( Example 5 )

A battery of the Example 5 was produced in such a manner that a coin-cell type electrode body was produced in the same manner as in Example 1 and put in a battery case, which was then filled with nonaqueous electrolyte solution.

In this case, there was used, as the nonaqueous electrolyte solution, a solution prepared by adding 500 ppm of water content ($H_2O$), which becomes a cause of deterioration in battery properties, and each mass% of 1, 2, 3 - benzotriazole, which is the compound, as shown in Fig. 5 to a mixed solvent of EC and DEC of an equivolume. The other methods for production were the same as in Example 1. In addition, a cycle test was performed in the same manner as in Example 1.

Table 5

| Concentration of additive in electrolyte solution (mass%) | Capacity-retention rate of battery after 100 cycles (%) |
|---|---|
| 0.01 | 60.2 |
| 0.02 | 65.3 |
| 0.05 | 78.2 |

Table 5 (continued)

| Concentration of additive in electrolyte solution (mass%) | Capacity-retention rate of battery after 100 cycles (%) |
|---|---|
| 0.10 | 88.1 |
| 0.30 | 93.0 |
| 0.50 | 92.8 |
| 1.00 | 76.5 |
| 5.00 | 67.7 |

( Evaluation )

In Example 5, change in capacity-retention rate of a battery to concentration of the compound added, and evaluation was given with a capacity-retention rate after 100 cycles. As obvious from Fig. 6, even in the case that only 0.01 mass % was contained in the electrolyte solution, increase in capacity-retention rate was found; the capacity-retention rate rose with increase in the concentration; and the best capacity-retention rate was given at around 0.3 mass%. Then, with the concentration being raised, the capacity-retention rate was decreased, and the capacity-retention rate was 70% or less with the concentration of 5.0 mass%, which is unbearable against practical use.

( Example 6)

A battery of Example 6 was prepared in such a manner that: a positive electrode slurry was produced by adding, as a conducting aid, 4 mass% of acetylene black to 100 mass% of $LiMn_2O_4$ spinel as positive active material and further adding a solvent and a binder; the positive electrode slurry was applied on both surfaces of an aluminum foil having a thickness of 20 μ m so as to have a thickness of about 100 μ m on each surface to obtain a positive electrode 2; a carbon powder as negative active material was applied on both surfaces of a copper foil having a thickness of 10 μ m so as to have a thickness of about 80 μ m on each surface to obtain a negative electrode 3; using the positive electrode 2 and the negative electrode 3, a wound type of electrode body was produced and put in a battery case, which was then filled with nonaqueous electrolyte solution. Here, as the nonaqueous electrolyte solution, there was used a solution prepared in such a manner that $LiPF_6$ as an electrolyte was dissolved in a mixed solvent of EC and DEC of an equivolume so as to give a solution having a concentration of 1 mol/liter, and 1, 2, 3 - benzotriazole of each mass% was added to the solution in the same manner as in Example 5. All these various kinds of batteries had a battery capacity of about 10Ah after the charge in the first cycle.

In addition, the cycle test was preformed by repeating a cycle of charge-discharge cycle shown in Fig. 7. That is, a battery in a charge condition with a discharge depth of 50% was discharged for 9 seconds with a current of 100A corresponding to 10C (discharge rate), followed by a pause for 18 seconds, and then charged for 6 seconds with 70A, and subsequently, charged for 27 seconds with 18A to put a battery in a 50% charge condition. Incidentally, deviation in discharge depth in each cycle was made minimum by fine adjusting current of the second charge (18A). In addition, to know the change in battery capacity during the durability test, a relative discharge capacity was obtained in such a manner that a capacity was suitably measured with a charge suspension voltage of 4.1 and a discharge suspension voltage of 2.5 under a current strength of 0.2 C, and a battery capacity at a predetermined number of cycles was divided by a battery capacity of the first cycle.

( Evaluation)

In Example 6, a wound type of electrode body of the present invention was evaluated for change in capacity-retention rate of a battery with reference to concentration of the compound added with a capacity-retention rate of after 20000 cycles. The relative capacity-retention rate was 80% or more in the range of 0.01 - 10.0 mass%, and further, the relative capacity-retention rate was 85% or more in the range of 0.10- 0.50 mass%. Here, from the comparison of the results of Examples 5 and 6, it seems that a wound type of electrode body requires a larger amount of the additive because of a larger volume in comparison with a coin-cell electrode body and of a curved body.

( Example 7 - 11, Comparative Example 3 )

Each of the batteries of Examples 7 - 11 and Comparative Example 3 was prepared in such a manner that: a positive electrode slurry was produced by adding, as a conducting aid, 4 mass% of acetylene black to 100 mass%

of $LiMn_2O_4$ spinel as positive active material and further adding a solvent and a binder; the positive electrode slurry was applied on both surfaces of an aluminum foil having a thickness of 20 μ m so as to have a thickness of about 100 μ m on each surface to obtain a positive electrode 2; a carbon powder as negative active material was applied on both surfaces of a copper foil having a thickness of 10 μ m so as to have a thickness of about 80 μ m on each surface to obtain a negative electrode 3; using the positive electrode 2 and the negative electrode 3, a wound type of electrode body was produced and put in a battery case, which was then filled with nonaqueous electrolyte solution. Here, as the nonaqueous electrolyte solution, there was used a solution prepared in such a manner that $LiPF_6$ as an electrolyte was dissolved in a mixed solvent of EC and DEC of an equivolume so as to give a solution having a concentration of 1 mol/liter, and 0.1 mass% of the compound (b) of the present invention was added to 100 mass% of the solution as shown in Table 6. All these various kinds of batteries had a battery capacity of about 10Ah after the charge in the first cycle.

Table 6

| | Additive | Amount of additive (mass% to electrolyte solution) |
|---|---|---|
| Example 7 | 1, 8 - diamino - 4, 5 -dihydroxyanthraquinone | 0.1 |
| Example 8 | 2, 4 - diamino - 6 -mercaptopyrimidine hemisulphate | 0.1 |
| Example 9 | 6 - hydroxy - 2, 4, 5 -triaminopyrimidine sulphate | 0.1 |
| Example 10 | 2 - iminopiperidine hydrochloride | 0.1 |
| Example 11 | Imipramine hydrochloride | 0.1 |
| Comparative Example 3 | (None) | - |

( Evaluation )

As is clear from Fig. 8, batteries of Examples 7 - 11 achieved a capacity-retention rate of 82% in a 20000-cycle test and exhibited by far excellent cycle characteristics in comparison with Comparative Example 3, where the compound was not used. This seems that the compound containing an electron-donating element and a substituent inactivated HF in the electrolyte solution, and a salt of strong acid formed by a reaction of anion of inorganic acid in the compound and $Li^+$ covered a surface of the negative active material to suppress further formation of SEI, and as a result the cycle life span was improved.

( Examples 12 - 14, Comparative Example 4 )

Batteries of Examples 1 - 3 and Comparative Example 1 are produced in such a manner that acetylene black as a conducting aid and polyvinylidene fluoride as a binder were mixed with $LiMn_2O_4$ spinel as positive active material at the ratio of 2 : 3 : 50 to give a positive electrode material; 0.01g of the positive electrode material was subjected to press molding under a pressure of 300 $kg/cm^2$ to give a disc-shaped positive electrode having a diameter of 20 mm; a coin-cell type of electrode body was produced by the use of the positive electrode and a negative electrode of carbon and put in a battery case, which was then filled with a nonaqueous electrolyte solution. Here, there was used, as the nonaqueous electrolyte solution, a solution prepared by adding 500 ppm of water content ($H_2O$), which becomes a cause of deterioration in battery properties, and each amount (ppm) of the compound as shown in Table 7, to a mixed solvent of EC and DEC of an equivolume, and then dissolving $LiPF_6$ therein to give a concentration of 1 mol/liter. All these various kinds of batteries had a battery capacity of about 1.3mA after the charge in the first cycle.

Table 7

| | Additive | Amount of additive (ppm) | Amount of water (ppm) |
|---|---|---|---|
| Example 12 | 6 - hydroxy - 2, 4, 5 -triaminopyrimidine sulphate | 1000 | 500 |
| Example 13 | 2 - iminopiperidine hydrochloride | 1000 | 500 |
| Example 14 | hexacyclen trisulphate | 500 | 500 |

Table 7 (continued)

| | Additive | Amount of additive (ppm) | Amount of water (ppm) |
|---|---|---|---|
| Comparative Example 4 | (none) | - | 500 |
| * Amount of additive and Amount of water express concentration in electrolyte solution. | | | |

( Evaluation)

As is clear from Fig. 9, batteries in Examples 12 - 14 of the present invention achieved a capacity-retention rate of 85% in a 100-cycle test and exhibited by far excellent cycle characteristics in comparison with the one in Comparative Example 4, where the compound was not used. Thus, it has been clearly proved that a compound disclosed in the present invention exhibits excellent effect in a cycle life span, which is an important battery characteristics, by an inspection in the Example, where water was intentionally added.

( Examples 15 - 18, Comparative Example 5 )

Batteries of Examples 15 - 18 and Comparative Example 5 were produced in the same manner as in Examples 7 - 11. Here, as the nonaqueous electrolyte solution, there was used a solution prepared in such a manner that $LiPF_6$ as an electrolyte was dissolved in a mixed solvent of an equivolume of EC and DEC so as to give a solution having a concentration of 1 mol/liter, and 0.1 mass% of the compound (c) of the present invention was added to 100 mass% of the solution as shown in Table 8. All these various kinds of batteries had a battery capacity of about 10Ah after the charge in the first cycle.

Table 8

| | Additive | Amount of additive (mass% to electrolyte solution) |
|---|---|---|
| Example 15 | 2, 2, 6, 6 - tetramethyl - 1 - piperidinyloxy free radical | 0.1 |
| Example 16 | 4 - cyano - 2, 2, 6, 6 - tetramethyl - 1 - piperidinyloxy free radical | 0.1 |
| Example 17 | 3 - cyano - 2, 2, 5, 5 - tetramethyl - 1 - pyrrolidinyloxy free radical | 0.1 |
| Example 18 | manganese (II) phthalocyanine | 0.1 |
| Comparative Example 5 | (None) | - |

( Evaluation )

As obvious from Fig. 10, batteries in Examples 15 - 18 of the present invention achieved a capacity-retention rate of 85% in a 20000-cycle test and exhibited by far excellent cycle characteristics in comparison with the one in Comparative Example 5, where the compound was not used. This seems that the cyclic compound containing a N - O radical in the molecular structure and the cyclic compound which functions as a $Mn^{2+}$ supplier suppress a radical decomposition reaction of the organic solvent and trap HF, thereby producing a good SEI to improve the cycle life span.

( Example 19, Comparative Example 6 )

Batteries of Example 19 and Comparative Example 6 were produced in the same manner as in Examples 12 - 14. Here, there was used, as the nonaqueous electrolyte solution, a solution prepared by adding 500 ppm of water content ($H_2O$), which becomes a cause of deterioration in battery characteristics, and 500 ppm of the compound as shown in Table 9, to a mixed solvent of an equivolume of EC and DEC, and then dissolving $LiPF_6$ therein to give a concentration of 1 mol/liter. All these various kinds of batteries had a battery capacity of about 1.3mA after the charge in the first cycle.

Table 9

| | Additive | Amount of additive (ppm) | Amount of water (ppm) |
|---|---|---|---|
| Example 19 | 4 - cyano - 2, 2, 2, 6 - tetramethyl - piperidinyloxy free radical | 500 | 500 |
| Comparative Example 6 | (none) | - | 500 |
| * Amount of additive and Amount of water express concentration in electrolyte solution. | | | |

( Evaluation)

As is clear from Fig. 11, a battery in Example 19 of the present invention achieved a capacity-retention rate of 93% in a 100-cycle test and exhibited by far excellent cycle characteristics in comparison with the one in Comparative Example 6, where the compound was not used.

( Example 20, Comparative Example 7 )

Batteries of Example 20 and Comparative Example 7 were produced in the same manner as in Examples 7 - 11. Here, as the nonaqueous electrolyte solution, there was used a solution prepared in such a manner that $LiPF_6$ as an electrolyte was dissolved in a mixed solvent of an equivolume of EC and DEC so as to give a solution having a concentration of 1 mol/liter, and 0.1 mass% of alumatrane tetramer was added to 100 mass% of the solution. All these various kinds of batteries had a battery capacity of about 10Ah after the charge in the first cycle.

( Evaluation )

As is clear from Fig. 12, a battery in Example 20 of the present invention achieved a capacity-retention rate of 82% in a 20000-cycle test and exhibited by far excellent cycle characteristics in comparison with the one in Comparative Example 7, where the compound was not used. This seems that the compound containing an atom showing Lewis acidity and an atom showing Lewis basisity inactivated $H_2O$ and HF in the electrolyte solution to improve the cycle life span.

( Example 21, Comparative Example 8 )

Batteries of Example 21 and Comparative Example 8 were produced in the same manner as in Examples 12 - 14. Here, there was used, as the nonaqueous electrolyte solution, a solution prepared by adding 500 ppm of water content ($H_2O$), which becomes a cause of deterioration in battery characteristics, and 500 ppm of alumatrane tetramer, to a mixed solvent of an equivolume of EC and DEC, and then dissolving $LiPF_6$ therein to give a concentration of 1 mol/liter. All these various kinds of batteries had a battery capacity of about 1.3mA after the charge in the first cycle.

( Evaluation )

As is clear from Fig. 13, a battery in Example 21 of the present invention achieved a capacity-retention rate of 93% in a 100-cycle test and exhibited by far excellent cycle characteristics in comparison with the one in Comparative Example 8, where the compound was not used.

( Example 22, Comparative Example 9 )

Batteries of Example 22 and Comparative Example 9 were produced in the same manner as in Examples 7 - 11. Here, as the nonaqueous electrolyte solution, there was used a solution prepared in such a manner that $LiPF_6$ as an electrolyte was dissolved in a mixed solvent of an equivolume of EC and DEC so as to give a solution having a concentration of 1 mol/liter, and 0.1 mass% of 1 - hydrido - 3, 5, 7, 9, 11, 13, 15 - heptacyclopentylpentacyclo [9. 5. 1. $1^{3,9}$. $1^{5,15}$. $1^{7,13}$] octasiloxane, which is expressed by the following chemical formula (XI), was added to 100 mass% of the solution. All these various kinds of batteries had a battery capacity of about 10Ah after the charge in the first cycle.

Chemical formula (XI)

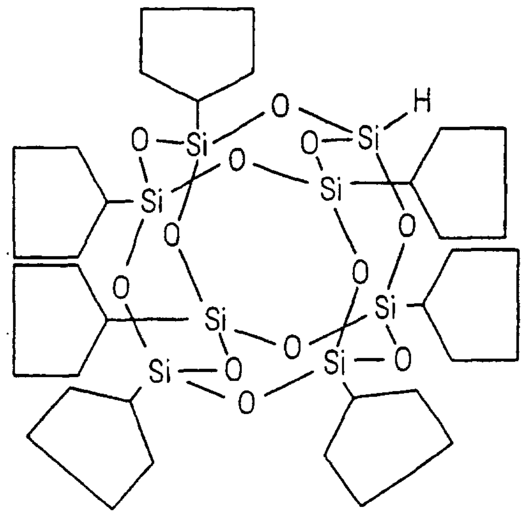

( Evaluation )

As is clear from Fig. 14, a battery in Example 22 of the present invention achieved a capacity-retention rate of 82% in a 20000-cycle test and exhibited by far excellent cycle characteristics in comparison with the one in Comparative Example 9, where the compound was not used. This seems that the compound containing an atom showing Lewis basisity inactivated HF in the electrolyte solution to improve the cycle life span.

( Example 23, Comparative Example 10 )

Batteries of Example 23 and Comparative Example 10 were produced in the same manner as in Examples 12 - 14. Here, there was used, as the nonaqueous electrolyte solution, a solution prepared by adding 1000 ppm of water content ($H_2O$), which becomes a cause of deterioration in battery properties, and 500 ppm of 1 - hydrido - 3, 5, 7, 9, 11, 13, 15 - heptacyclopentylpentacyclo [9. 5. 1. $1^{3,9}$. $1^{5,15}$. $1^{7,13}$] octasiloxane, which is the same compound as in Example 22 and dissolving $LiPF_6$ as an electrolyte so as to give a solution having a concentration of 1 mol/litter. All these various kinds of batteries had a battery capacity of about 1.3mA after the charge in the first cycle.

( Evaluation )

As obvious from Fig. 15, a battery in Example 23 of the present invention achieved a capacity-retention rate of 91% in a 100-cycle test and exhibited by far excellent cycle characteristics in comparison with the one in Comparative Example 10, where the compound was not used.

( Examples 24 - 32 and Comparative Examples 11, 12 )

Batteries were produced in a various manner such as adding a nonionic surfactant to nonaqueous electrolyte solution as shown in Table 10, and cycle characteristics of the batteries were evaluated.

Table 10

| Sample | Additive | Number of n | Amount of additive per 1 ml of electrolyte solution | Method of Addition / Application |
|---|---|---|---|---|
| Example 24 | Polyethyleneglycolmono – 4 – nonylphenylether | 10 | 10 μ l | Added to nonaqueous electrolyte solution |
| Example 25 | Polyethyleneglycolmonododecylether | 25 | 10 μ l | Added to nonaqueous electrolyte solution |
| Example 26 | Polyethyeleneglycolmonostearate | 2 | 10 μ l | Added to nonaqueous electrolyte solution |
| Example 27 | Polyethyeleneglycolmonostearate | 55 | 10 μ l | Added to nonaqueous electrolyte solution |
| Example 28 | Polyethyeleneglycolstearylamin | 10 | 10 μ l | Added to nonaqueous electrolyte solution |
| | | | Concentration of applied solution | |
| Example 29 | Polyethyeleneglycolmono – 4 – nonylphenylether | 10 | 1wt%/NMP | Added to negative electrode slurry |
| Example 30 | Polyethyeleneglycolmono – 4 – nonylphenylether | 10 | 1wt%/NMP | Applied on positive electrode |
| Example 31 | Polyethyeleneglycolmono – 4 – nonylphenylether | 10 | 1wt%/NMP | Added to positive active material powder |
| Example 32 | Polyethyeleneglycolmono – 4 – nonylphenylether | 10 | 1wt%/NMP | Applied on negative electrode |
| Comparative Example 11 | (None) | | | |
| | | | Amount of additive per 1 ml of electrolyte solution | |
| Comparative Example 12 | Polyethyleneglycol | 10 | 10 μ l | Added to nonaqueous electrolyte solution |

Here, batteries of Examples 24 - 32 and Comparative Examples 11 • 12 were produced in a similar manner to that in Examples 7 - 11. Here, as the nonaqueous electrolyte solution, there was used a solution prepared in such a manner that $LiPF_6$ as an electrolyte was dissolved in a mixed solvent of an equivolume of EC and DEC so as to give a solution having a concentration of 1 mol/liter. In addition, "MNP" in Table 10 means N - methyl - 2 - pyrrolidone, which is a solvent for dissolving the nonionic surfactant. All these various kinds of batteries had a battery capacity of about 10Ah after the charge in the first cycle.

The results of the test are shown in Fig. 16. The batteries in Example 24 - 32 had almost no difference in cycle characteristics and gave better properties than Comparative Example 11, where no nonionic surfactant was used. On the other hand, in the case of Comparative Example 12, where polyethyleneglycol was added, deterioration in cycle characteristics was observed more remarkably than in the case of Comparative Example 11. It can be presumed that this results from the generation of HF due to action of polyethyleneglycol itself on the electrolyte in the same manner as a water molecule.

( Examples 33 - 35, Comparative Example 13 )

Fig. 17 is a graph showing cycle characteristics of batteries produced with various nonaqueous electrolyte solution shown in Table 11. $LiPF_6$ was used as the electrolyte, and a mixed solvent of EC and DEC of the same volume was used as the organic solvent. These are common to all the samples. As shown in Table 11, triethylsilane was added as a water-extracting agent in Example 33, tributylphosphate was added as a hydrofluoric acid-extracting agent, and both triethylsilane and tributylphosphate were added in Example 35. However, neither a water-extracting agent nor a hydrofluoric acie-extracting agent was added in Comparative Example 13.

Table 11

| | Additive | Amount of additive per 1 ml of nonaqueous electrolyte solution | Nonaqueous electrolyte solution | |
|---|---|---|---|---|
| | | | Electrolyte | Organic solvent |
| Example 33 | Triethylsilane | 10 μ l | $LiPF_6$ | EC+DEC |
| Example 34 | Tributylphosphate | 10 μ l | | |
| Example 35 | Triethylsilane/ tributylphosphate | 5 μ l/ 5 μ l | | |
| Comparative Example 13 | (None) | - | | |

Incidentally, batteries of Examples 33 - 35 and Comparative Example 13 were produced in the same manner as in Examples 7 - 11. All these various kinds of batteries had a battery capacity of about 10Ah after the charge in the first cycle.

From the results of the test, it was confirmed that cycle characteristics were improved in comparison with a battery of Comparative Example 13 in the case that at least one of a water-extracting agent and a hydrofluoric acid-extracting agent is added to the nonaqueous electrolyte solution as shown in Fig. 17. Example 35, where both a water-extracting agent and a hydrofluoric acid-extracting agent are added, exhibited cycle characteristics equally to Examples 33 and 34; which seems to result from the same amount of additives in total.

Batteries of Examples 1 - 35 and Comparative Examples 1 - 13 were produced by the use of various battery-constituting members prepared by impregnating the inside each battery case with the compound in the aforementioned method. In addition, the other members and environment for the test were made the same among all the samples, the battery members were sufficiently dried until the time just before assembly of each battery, and influence of penetration of water from outside of each battery due to insufficient sealing of the battery, or the like, was eliminated.

Incidentally, in a battery for engine driving or motor driving for an electric vehicle, discharge of a large current is required upon starting, accelerating, ascending a slope, or the like; and at this time, temperature of the battery rises. However, in the case of using nonaqueous electrolyte solution or the like, where the compound of the present invention is added, it hardly happens that a trapped HF is extricated again to be dissolved in the nonaqueous electrolyte solution even if temperature of the battery has risen; and thereby maintenance of good cycle characteristics can be planned.

The present invention has been described mainly with Examples using a wound-type electrode body. However, it goes without saying that a battery structure does not matter in the present invention. Here, in a coin battery having a small capacity, control of water content is easy in such a manner that production and storage of the parts and assembly of the battery are conducted in an inert gas atmosphere, or the like, since the battery itself is small. However, in producing a lithium secondary battery having a large capacity where a wound type or a lamination type of interior electrode body is employed as in the present invention, it is necessary to use a relatively large-scale apparatus in, for example, applying electrode active material on a current collector, which is conducted in an atmosphere similar to in the air even in a room. Particularly, it is hard to be thought in actuality from a point of production cost that the production is performed in an environment where water is completely removed even in a thermostatic chamber where a water content is controlled.

Therefore, the present invention is suitably employed in a lithium secondary battery having a large battery capacity, which water content is not easily controlled in production steps. Specifically, the present invention is employed in the one having a battery capacity of 2Ah or more where a wound type or a lamination type of electrode body is used. Though it goes without saying that a use of the battery is not limited, it can be particularly suitably used for starting of an engine or for driving a motor for an electric vehicle or a hybrid electric vehicle as a battery having a large capacity for being mounted on a vehicle, the battery being required for a high output, a low internal resistance, and excellent cycle characteristics.

Industrial Applicability

As described above, a lithium secondary battery of the present invention exhibits an excellent effect that self-discharge property, cycle characteristics, long period stability and reliability can be planned. A lithium secondary battery of the present invention is suitably employed in the one having a wound type or lamination type of electrode body and having a battery capacity of 2Ah or more and can be used for starting of an engine or for driving a motor for an electric vehicle or a hybrid electric vehicle as a battery having a large capacity for being mounted on a vehicle, the battery being required for a high output, a low internal resistance, and excellent cycle characteristics.

## Claims

**1.** A lithium secondary battery comprising:

an electrode body having a positive electrode, a negative electrode, and a separator, the positive electrode and the negative electrode being wound or laminated by means of the separator, and
a nonaqueous electrolyte solution containing a lithium compound as a electrolyte;

**characterized in that** at least one of the positive electrode, the negative electrode, the separator, and the nonaqueous electrolyte solution contains at least one of:

(a) an organic and/or inorganic inhibitor, which functions as a Cu-corrosion inhibitor or a Cu-trapping agent,

(b) a compound having an organic base and an inorganic acid which are unitarily combined in a molecule,
(c) a cyclic compound containing a N-O radical in a molecular structure,
(d) a cyclic compound which becomes a $Mn^{2+}$ supplier in the nonaqueous electrolyte solution,
(e) a compound containing an atom showing Lewis acidity and an atom showing Lewis basisity in one molecule molecular-structurally,
(f) a three-dimensional siloxane compound, and
(g) a nonionic surfactant; or
the nonaqueous electrolyte solution contains:
(h) a water-extracting agent, or
(i) a hydrofluoric acid-extracting agent.

**2.** A lithium secondary battery according to claim 1, wherein a central element of a polar group of said organic inhibitor contains at least one selected from the group consisting of N, P and As in 5B group and O, S and Se in 6B group of the periodic table.

**3.** A lithium secondary battery according to claim 1, wherein said organic inhibitor is a sulfur compound.

**4.** A lithium secondary battery according to claim 1, wherein said organic inhibitor is an imidazole-analogue organic compound.

**5.** A lithium secondary battery according to claim 1, wherein said inorganic inhibitor is one selected from the group consisting of phosphates, chromates, iron, or ironic compounds, nitrites, and silicates.

**6.** A lithium secondary battery according to claim 1, wherein said organic base of said compound (b) is a cyclic compound containing an electron-donating element.

**7.** A lithium secondary battery according to claim 1, wherein said organic base of said compound (b) contains an electron-donating substituent.

**8.** A lithium secondary battery according to claim 1, wherein said inorganic acid of said compound (b) is a strong acid.

**9.** A lithium secondary battery according to claim 1, wherein said inorganic acid of said compound (b) is hydrogen chloride or sulfuric acid.

**10.** A lithium secondary battery according to claim 1, wherein said cyclic compound containing a N-O radical in a molecular structure is a compound having one ring.

**11.** A lithium secondary battery according to claim 1, wherein said cyclic compound containing a N-O radical in a molecular structure is a compound having a molecular structure shown by the following general formula (I);

General formula (I):

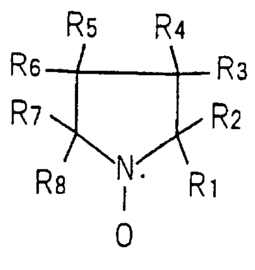

($R_1$ - $R_8$: a hydrogen radical, a hydrocarbon radical, or a cyano radical)

**12.** A lithium secondary battery according to claim 1 or 2, wherein said cyclic compound containing a N-O radical in a molecular structure is a compound having a molecular structure shown by the following general formula (II);

General formula (II):

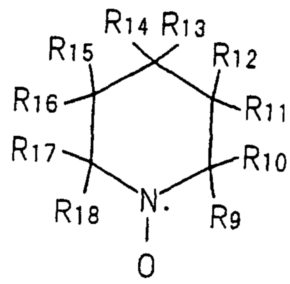

($R_9$ - $R_{18}$: a hydrogen radical, a hydrocarbon radical, or a cyano radical)

**13.** A lithium secondary battery according to claim 1, wherein said cyclic compound which becomes a $Mn^{2+}$ supplier is manganese (II) phthalocyanine or a manganese (II) phthalocyanine derivative.

**14.** A lithium secondary battery according to claim 1, wherein said compound (e) is alumatrane tetramer shown by the following chemical formula (III).

Chemical formula (III)

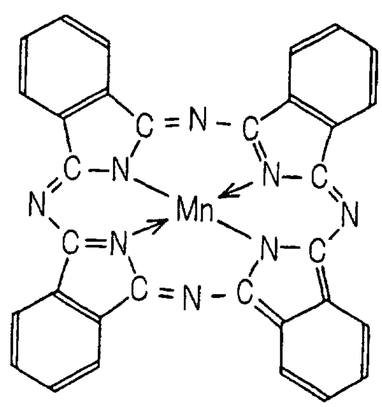

**15.** A lithium secondary battery according to claim 1, **characterized in that** said nonionic surfactant is a compound having an ether linkage.

**16.** A lithium secondary battery according to claim 1, wherein said nonionic surfactant is represented by the general formula $R_1(OR_2)_nR_3R_4$ (n is an integer), the $R_1$ radical and the $R_2$ radical are groups mainly containing hydrogen (H) and/or carbon (C), the $R_3$ radical is a group of oxygen (O), nitrogen (N), or an ether linkage (OCO), with linking on the side of the $R_2$ radical, and the R4 radical is not hydrogen (H) but a group mainly containing hydrogen (H) and carbon (C).

**17.** A lithium secondary battery according to claim 1, wherein said lithium compound is lithium phosphate hexafluoride.

**18.** A lithium secondary battery according to claim 1, wherein lithium manganate having a cubic spinel structure having lithium and manganese as main components is used as a positive active material.

**19.** A lithium secondary battery according to claim 1, wherein a carbonaceous material is used as a negative active material.

**20.** A lithium secondary battery according to claim 1, wherein said water-extracting agent dissolves in said nonaqueous electrolyte solution.

**21.** A lithium secondary battery according to claim 1, wherein said water-extracting agent is an organic phosphorous compound.

**22.** A lithium secondary battery according to claim 1, wherein a hydrofluoric acid-extracting agent is added to said electrolyte solution.

**23.** A lithium secondary battery according to claim 1, wherein said hydrofluoric acid-extracting agent is an organic silicon compound or an organic antimony compound.

**24.** A lithium secondary battery according to claim 1, wherein said hydrofluoric acid-extracting agent is one capable of dissolving in said nonaqueous electrolyte solution.

**25.** A lithium secondary battery according to any one of claims 1 - 24, wherein a capacity of the battery is 2Ah or more.

**26.** A lithium secondary battery according to any one of claims 1 - 25, wherein the battery is for being mounted on a vehicle.

**27.** A lithium secondary battery according to claim 26, wherein the battery is used for an electric vehicle or a hybrid electric vehicle.

**28.** A lithium secondary battery according to claim 26, wherein the battery is used for starting of an engine.

FIG.1

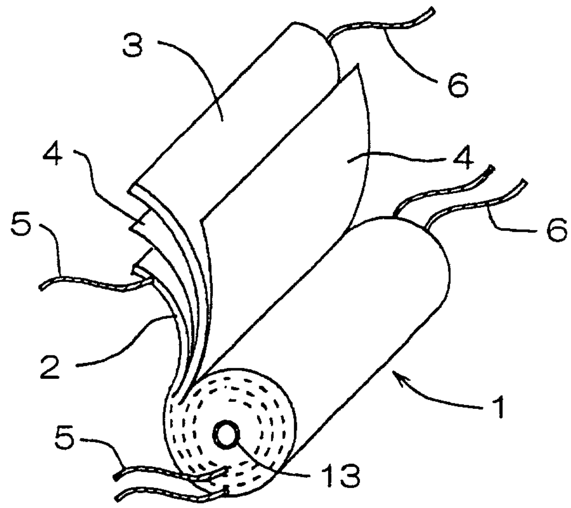


FIG.2

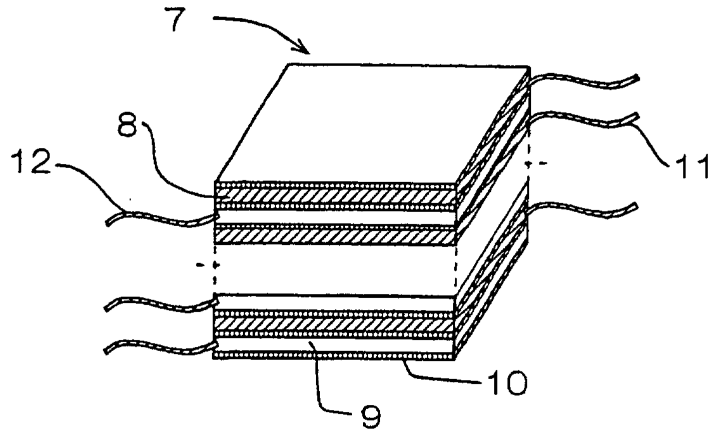

FIG.3

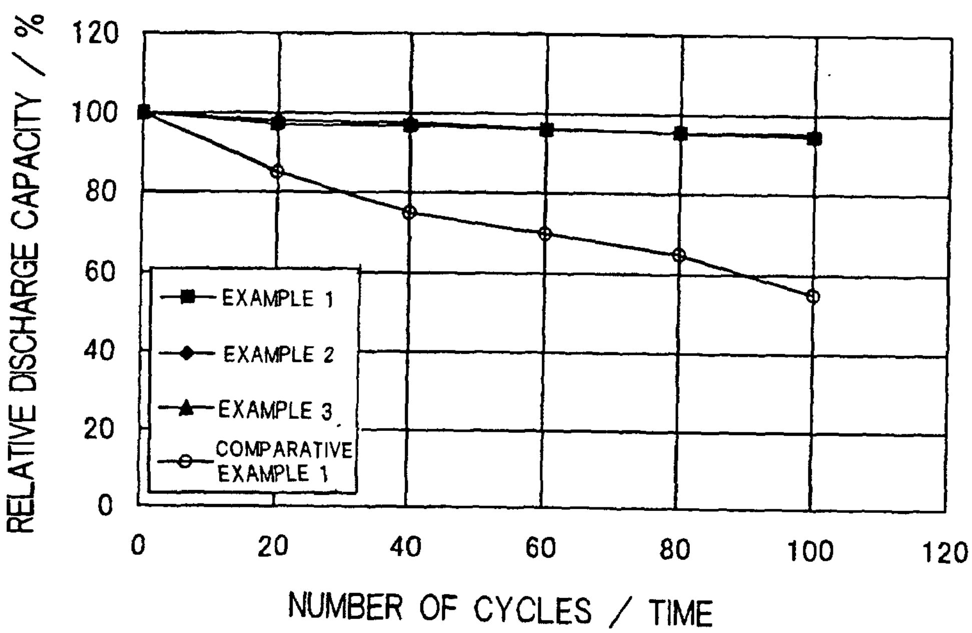
RELATIVE DISCHARGE CAPACITY / %
120
100
80
60
40
20
0
0
20
40
60
80
100
120
NUMBER OF CYCLES / TIME
EXAMPLE 1
EXAMPLE 2
EXAMPLE 3
COMPARATIVE EXAMPLE 1

FIG.4(a)

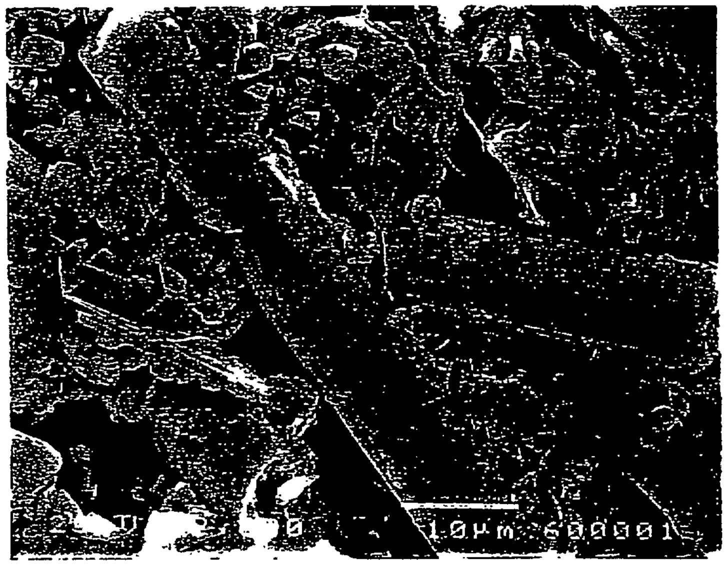

FIG.4(b)

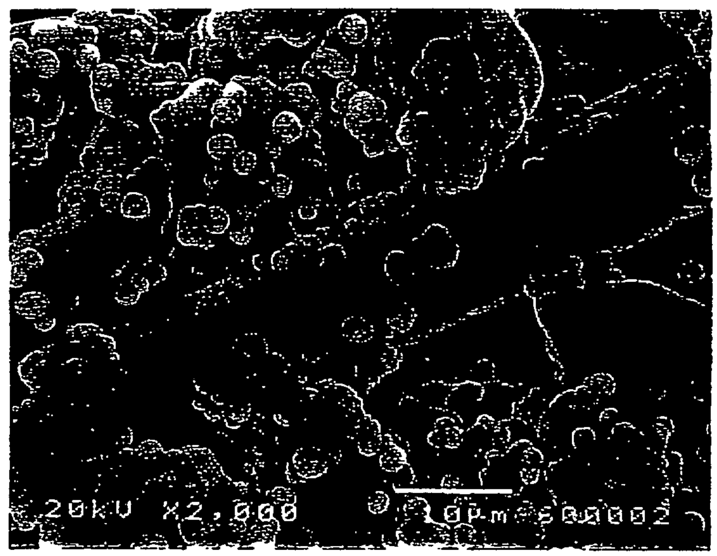

FIG.5

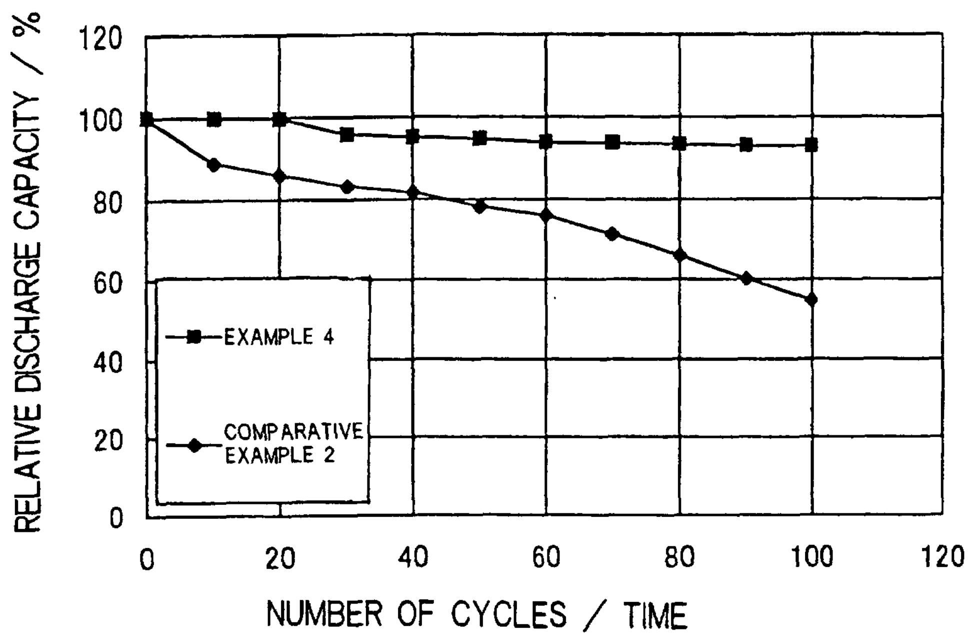
RELATIVE DISCHARGE CAPACITY / %
120
100
80
60
40
20
0
0
20
40
60
80
100
120
NUMBER OF CYCLES / TIME
EXAMPLE 4
COMPARATIVE EXAMPLE 2

FIG.6

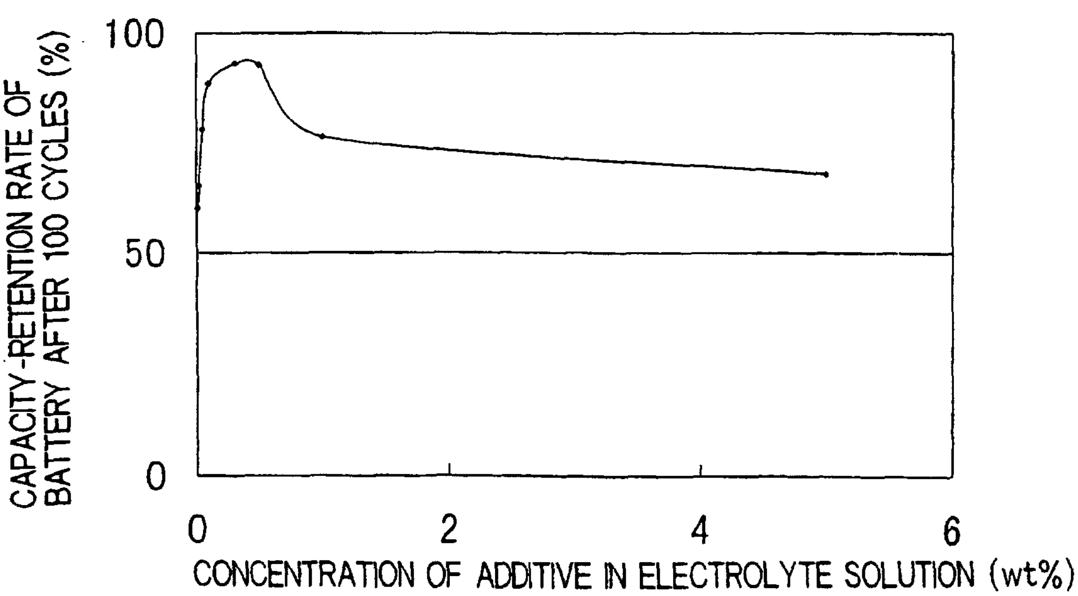
CAPACITY-RETENTION RATE OF BATTERY AFTER 100 CYCLES (%)
100
50
0
0
2
4
6
CONCENTRATION OF ADDITIVE IN ELECTROLYTE SOLUTION (wt%)

FIG.7

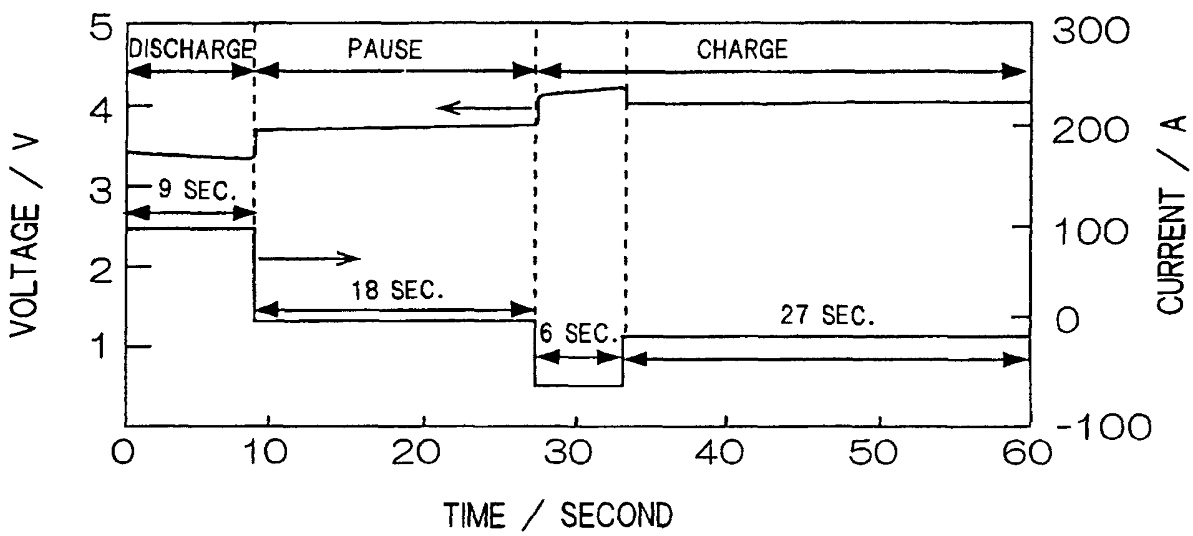
DISCHARGE
PAUSE
CHARGE
9 SEC.
18 SEC.
6 SEC.
27 SEC.
VOLTAGE / V
CURRENT / A
TIME / SECOND
5
4
3
2
1
300
200
100
0
-100
0
10
20
30
40
50
60

FIG.8

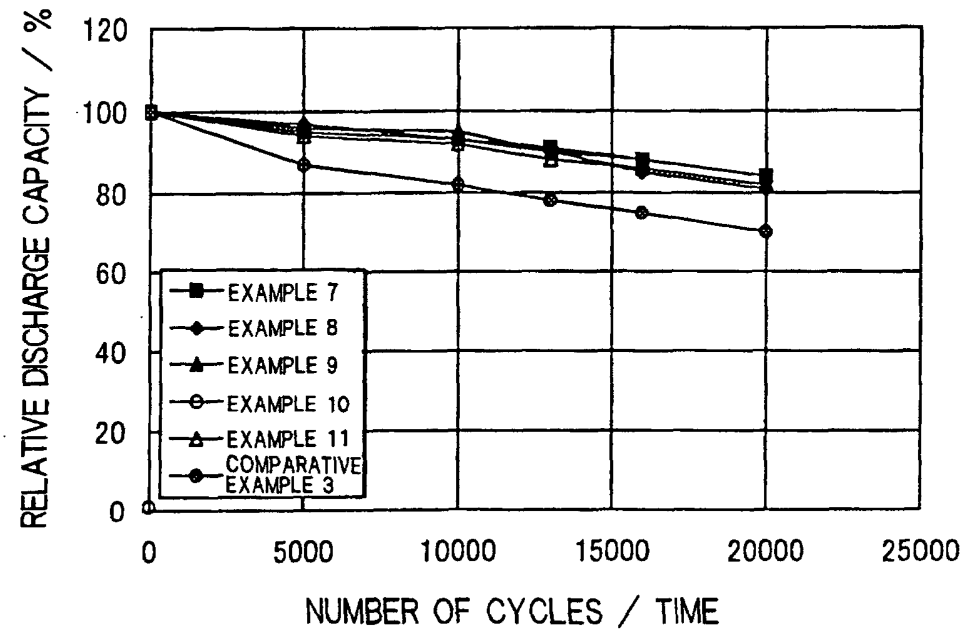

RELATIVE DISCHARGE CAPACITY / %
120
100
80
60
40
20
0
0
5000
10000
15000
20000
25000
NUMBER OF CYCLES / TIME
EXAMPLE 7
EXAMPLE 8
EXAMPLE 9
EXAMPLE 10
EXAMPLE 11
COMPARATIVE EXAMPLE 3


FIG.9

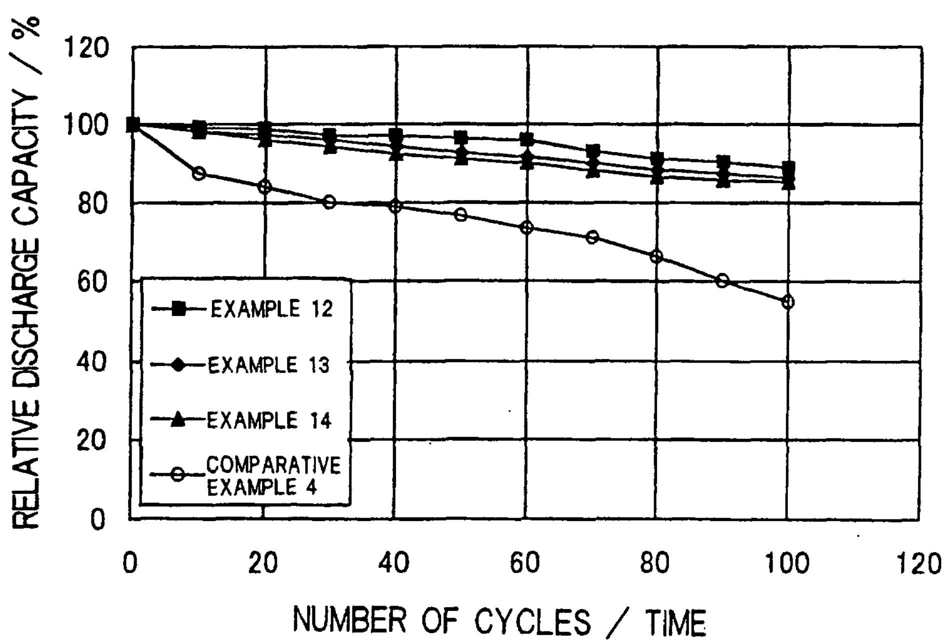

RELATIVE DISCHARGE CAPACITY / %
120
100
80
60
40
20
0
0
20
40
60
80
100
120
NUMBER OF CYCLES / TIME
EXAMPLE 12
EXAMPLE 13
EXAMPLE 14
COMPARATIVE EXAMPLE 4

FIG.10

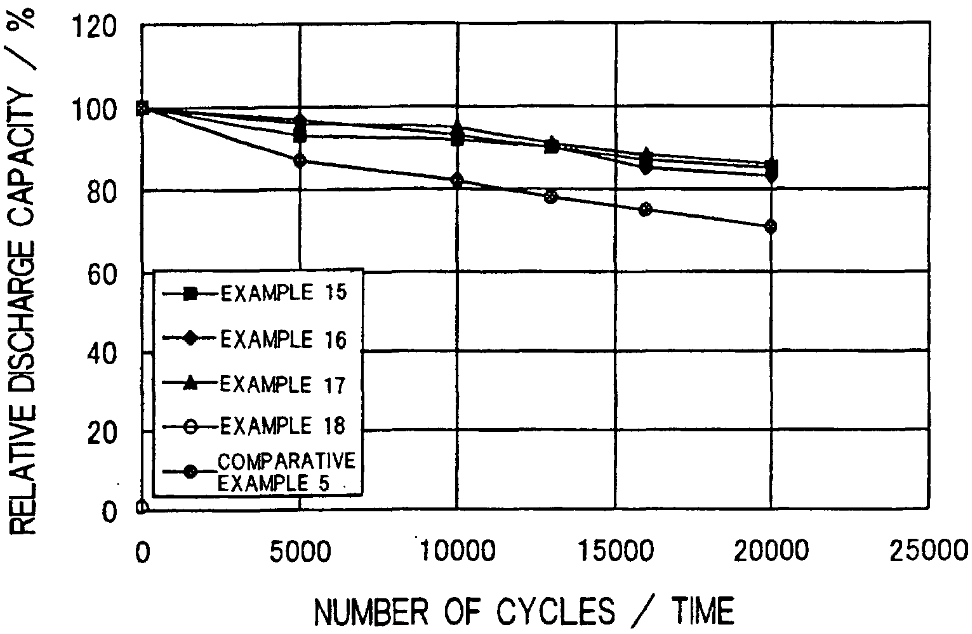
RELATIVE DISCHARGE CAPACITY / %
120
100
80
60
40
20
0
0
5000
10000
15000
20000
25000
NUMBER OF CYCLES / TIME
EXAMPLE 15
EXAMPLE 16
EXAMPLE 17
EXAMPLE 18
COMPARATIVE EXAMPLE 5

FIG.11

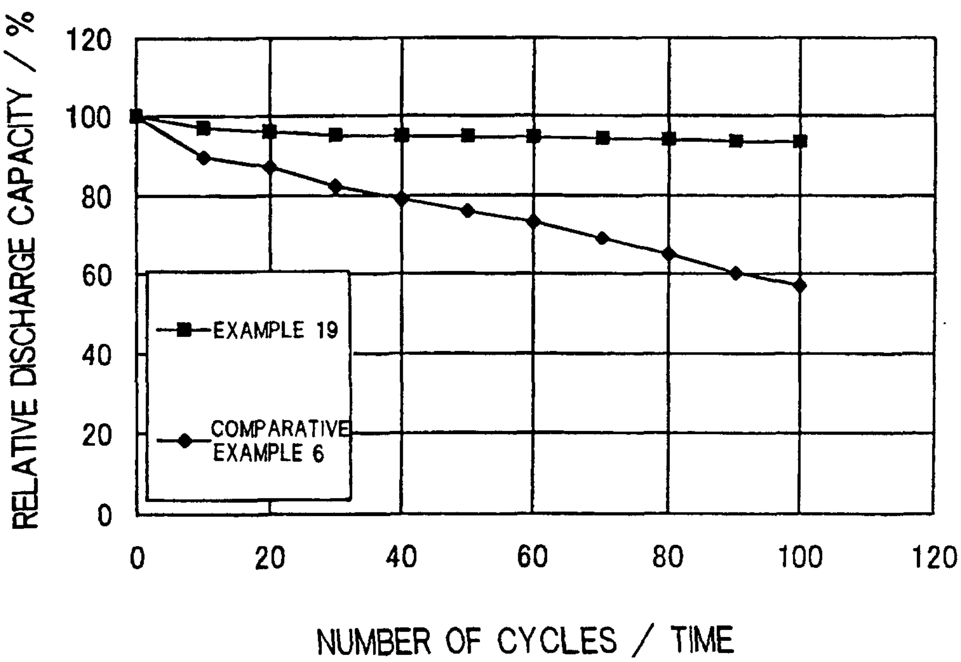
RELATIVE DISCHARGE CAPACITY / %
120
100
80
60
40
20
0
0
20
40
60
80
100
120
NUMBER OF CYCLES / TIME
EXAMPLE 19
COMPARATIVE EXAMPLE 6

FIG.12

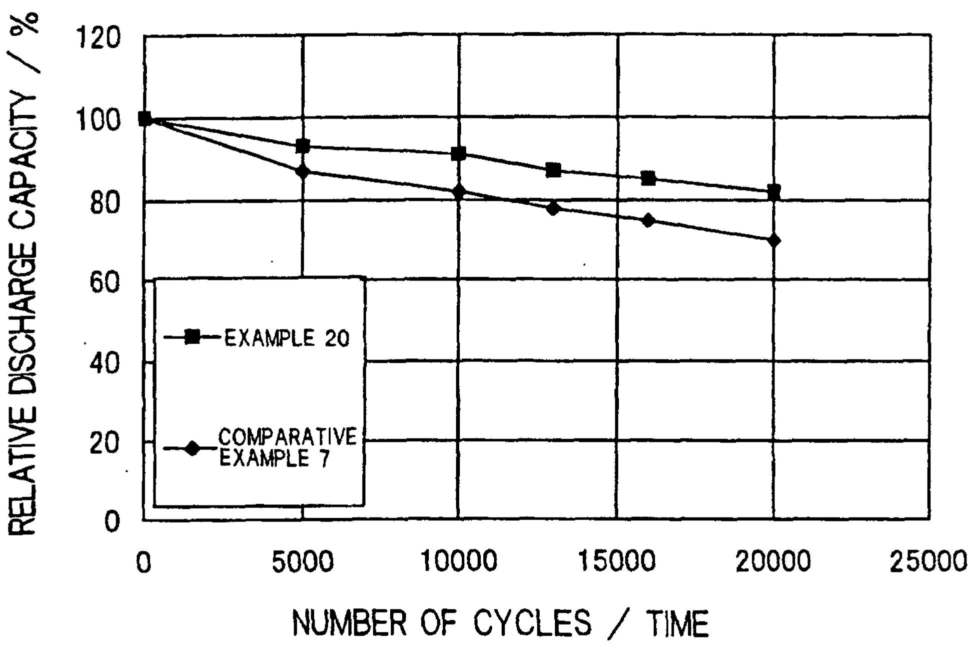
RELATIVE DISCHARGE CAPACITY / %
120
100
80
60
40
20
0
EXAMPLE 20
COMPARATIVE EXAMPLE 7
0
5000
10000
15000
20000
25000
NUMBER OF CYCLES / TIME

FIG.13

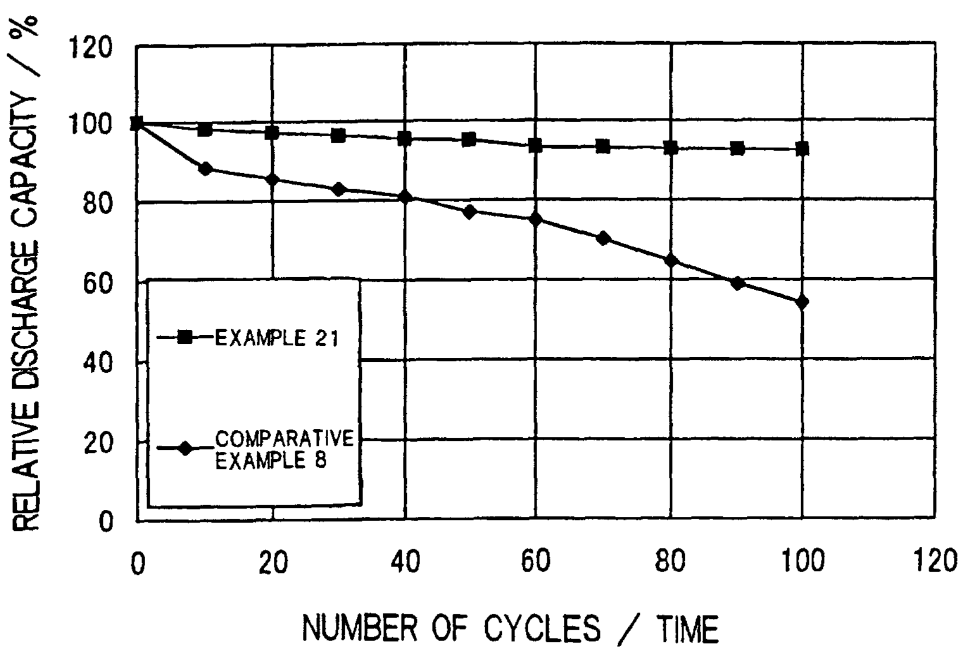
RELATIVE DISCHARGE CAPACITY / %
120
100
80
60
40
20
0
EXAMPLE 21
COMPARATIVE EXAMPLE 8
0
20
40
60
80
100
120
NUMBER OF CYCLES / TIME

FIG.14

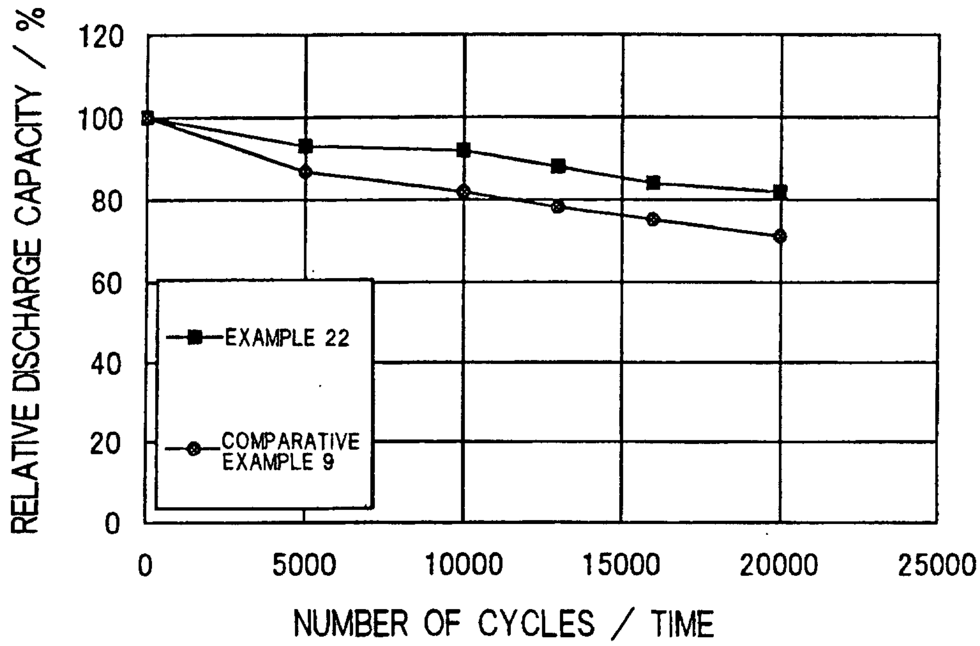
RELATIVE DISCHARGE CAPACITY / %
120
100
80
60
40
20
0
0
5000
10000
15000
20000
25000
NUMBER OF CYCLES / TIME
EXAMPLE 22
COMPARATIVE EXAMPLE 9

FIG.15

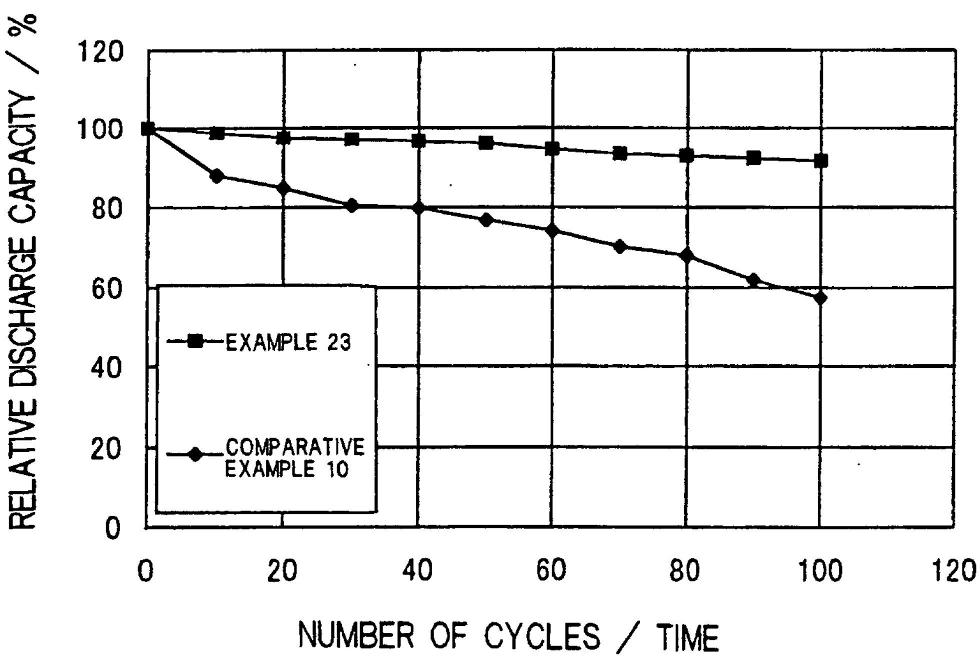
RELATIVE DISCHARGE CAPACITY / %
120
100
80
60
40
20
0
0
20
40
60
80
100
120
NUMBER OF CYCLES / TIME
EXAMPLE 23
COMPARATIVE EXAMPLE 10

FIG.16

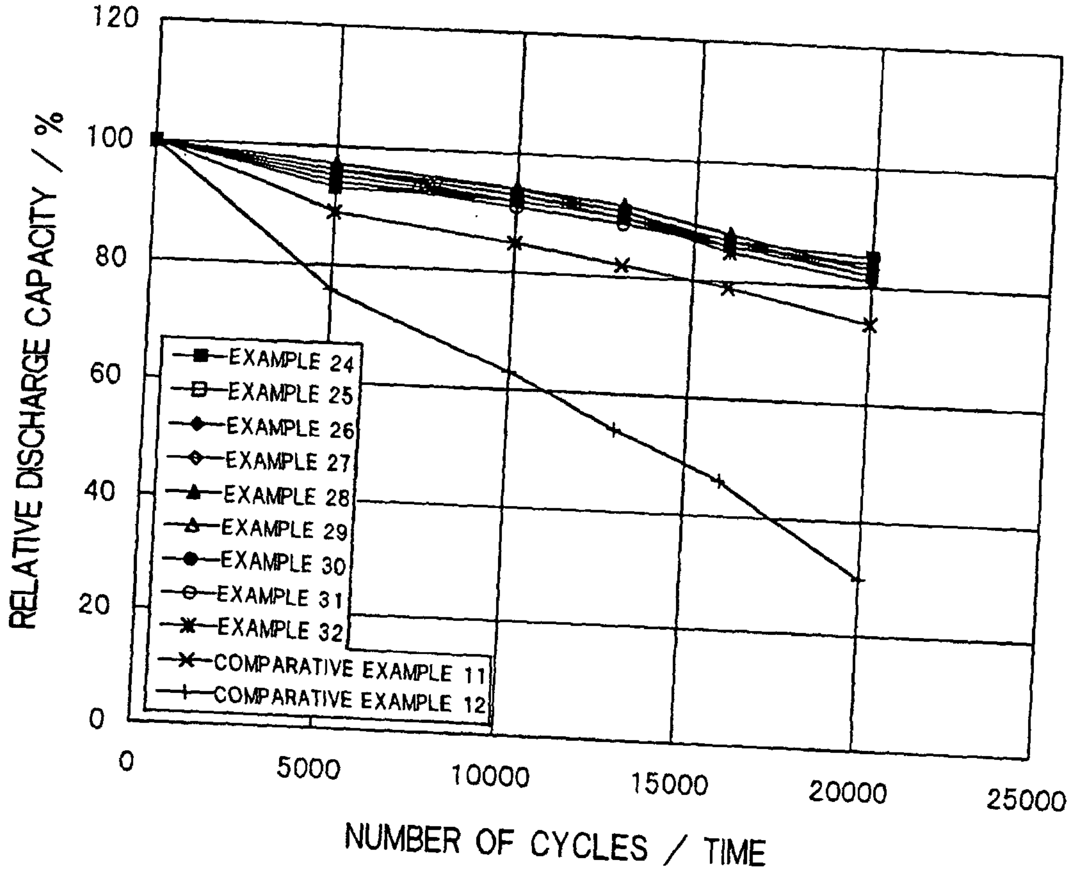
120
100
80
60
40
20
0
RELATIVE DISCHARGE CAPACITY / %
0
5000
10000
15000
20000
25000
NUMBER OF CYCLES / TIME
EXAMPLE 24
EXAMPLE 25
EXAMPLE 26
EXAMPLE 27
EXAMPLE 28
EXAMPLE 29
EXAMPLE 30
EXAMPLE 31
EXAMPLE 32
COMPARATIVE EXAMPLE 11
COMPARATIVE EXAMPLE 12

FIG.17

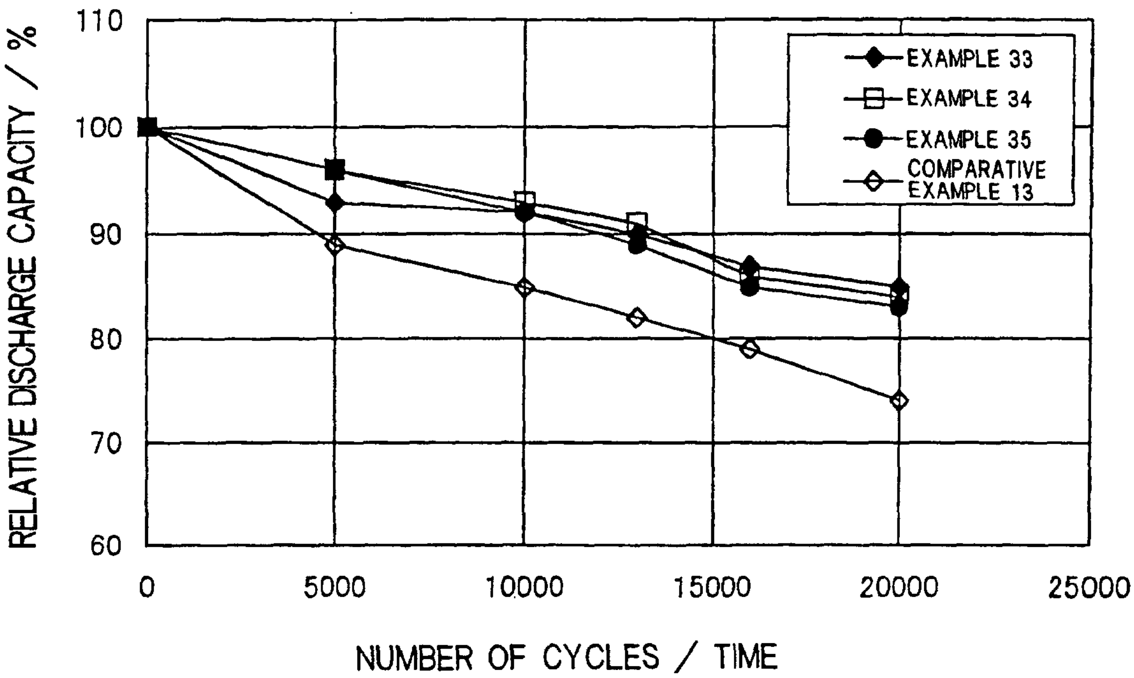

RELATIVE DISCHARGE CAPACITY / %
110
100
90
80
70
60
0
5000
10000
15000
20000
25000
NUMBER OF CYCLES / TIME
EXAMPLE 33
EXAMPLE 34
EXAMPLE 35
COMPARATIVE EXAMPLE 13

# INTERNATIONAL SEARCH REPORT

International application No.
PCT/JP01/01135

A. CLASSIFICATION OF SUBJECT MATTER
Int.Cl$^7$ H01M10/40

According to International Patent Classification (IPC) or to both national classification and IPC

B. FIELDS SEARCHED

Minimum documentation searched (classification system followed by classification symbols)
Int.Cl$^7$ H01M10/40

Documentation searched other than minimum documentation to the extent that such documents are included in the fields searched
Jitsuyo Shinan Koho 1926-1996 Jitsuyo Shinan Toroku Koho 1996-2001
Kokai Jitsuyo Shinan Koho 1971-2001 Toroku Jitsuyo Shinan Koho 1994-2001

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br><br><br><br>A | JP, 2000-77103, A (Hitachi, Ltd.), 14 March, 2000 (14.03.00), Claims 1 to 4, 8 to 10, 14, 15 & WO, 00/13251, A | 1,2,17-19, 22,24-28<br><br><br><br>3-16,20,21,23 |
| X | JP, 11-273683, A (The Furukawa Electric Co., Ltd.), 08 October, 1999 (08.10.99), Claims 3, 4; column 5, lines 36 to 41 (Family: none) | 1-5,17-19, 25-28 |
| X | JP, 11-67233, A (Japan Storage Battery Co., Ltd.), 09 March, 1999 (09.03.99), Claims 1, 2 (Family: none) | 1,5,17-19, 25-28 |
| X | JP, 9-139233, A (Denso Corporation), 27 May, 1997 (27.05.97), Claim 1 (Family: none) | 1-4,17-19, 25-28 |
| X | JP, 11-126633, A (Samsung Display Devices Co., Ltd.), 11 May, 1999 (11.05.99), Claims 1, 7, 8 & GB, 2328786, A | 1,15-19, 25-28 |

☒ Further documents are listed in the continuation of Box C. ☐ See patent family annex.

* Special categories of cited documents:
"A" document defining the general state of the art which is not considered to be of particular relevance
"E" earlier document but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

Date of the actual completion of the international search
17 May, 2001 (17.05.01)

Date of mailing of the international search report
29 May, 2001 (29.05.01)

Name and mailing address of the ISA/
Japanese Patent Office

Authorized officer

Facsimile No.

Telephone No.

Form PCT/ISA/210 (second sheet) (July 1992)

## INTERNATIONAL SEARCH REPORT

International application No.
PCT/JP01/01135

**Box I Observations where certain claims were found unsearchable (Continuation of item 1 of first sheet)**

This international search report has not been established in respect of certain claims under Article 17(2)(a) for the following reasons:

1. ☐ Claims Nos.:
because they relate to subject matter not required to be searched by this Authority, namely:

2. ☐ Claims Nos.:
because they relate to parts of the international application that do not comply with the prescribed requirements to such an extent that no meaningful international search can be carried out, specifically:

3. ☐ Claims Nos.:
because they are dependent claims and are not drafted in accordance with the second and third sentences of Rule 6.4(a).

**Box II Observations where unity of invention is lacking (Continuation of item 2 of first sheet)**

Claim 1 describes a group of inventions having the special technical feature that a cell comprises at least one of the materials (a) to (i). Since the materials (a) to (i) have not the same or corresponding relationship with one another, there is no technical relationship among the above group of inventions involving a same or corresponding technical feature.

Accordingly, a group of inventions described in claim 1 and inventions described in claim 2 to 28 which are defined by referring to claim 1 do not comply with the requirement of unity of invention.

1. ☐ As all required additional search fees were timely paid by the applicant, this international search report covers all searchable claims.

2. ☒ As all searchable claims could be searched without effort justifying an additional fee, this Authority did not invite payment of any additional fee.

3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on Protest** ☐ The additional search fees were accompanied by the applicant's protest.
☐ No protest accompanied the payment of additional search fees.

Form PCT/ISA/210 (continuation of first sheet (1)) (July 1992)

## INTERNATIONAL SEARCH REPORT

International application No.
PCT/JP01/01135

C (Continuation). DOCUMENTS CONSIDERED TO BE RELEVANT

| Category* | Citation of document, with indication, where appropriate, of the relevant passages | Relevant to claim No. |
|---|---|---|
| X | JP, 6-60877, A (Sanyo Electric Co., Ltd.),<br>04 March, 1994 (04.03.94),<br>Claims 1, 4; column 3, lines 2 to 10 (Family: none) | 1,15-19,<br>25-28 |
| X | JP, 11-16602, A (Toyota Central Research and Development Laboratories, Inc.),<br>22 January, 1999 (22.01.99),<br>Claim 1 (Family: none) | 1,17-20,<br>23-28 |
| X | JP, 2000-12080, (Mitsui Chemicals, Ltd.),<br>14 January, 2000 (14.01.00),<br>Claims 1 to 10 (Family: none) | 1,17-21,<br>25-28 |
| A | JP, 2000-58123, A (Sony Corporation),<br>25 February, 2000 (25.02.00) (Family: none) | 1,17-19,<br>25-28 |
| P,X | JP, 2000-268861, A (Sanyo Electric Co., Ltd.),<br>29 September, 2000 (29.09.00),<br>Claims 1 to 5 (Family: none) | 1,10-12,<br>17-19,25-28 |

Form PCT/ISA/210 (continuation of second sheet) (July 1992)